# EUROPÄISCHE PATENTSCHRIFT

(11) **EP 3 590 815 B1**
(45) Veröffentlichungstag und Bekanntmachung des Hinweises auf die Patenterteilung: **14.04.2021**
(21) Anmeldenummer: 19184663.3
(22) Anmeldetag: 05.07.2019
(51) Int. Cl.: B60B 27/02, B60B 27/04, F16D 41/18, F16D 41/24, B62M 6/40, B62M 9/04

(54) **FAHRRADKOMPONENTE FÜR EIN WENIGSTENS TEILWEISE MUSKELBETRIEBENES FAHRRAD**
COMPONENTS FOR A BICYCLE THAT IS AT LEAST PARTIALLY POWERED BY MUSCLE POWER
COMPOSANT DE BICYCLETTE POUR UNE BICYCLETTE ENTRAÎNÉE AU MOINS PARTIELLEMENT PAR LA PUISSANCE MUSCULAIRE

(30) Priorität: 06.07.2018 DE 102018116465
(43) Veröffentlichungstag der Anmeldung: 08.01.2020
(73) Patentinhaber: DT Swiss AG, 2504 Biel (CH)
(72) Erfinder: Walthert, Martin, CH-3270 Aarberg (CH); Spahr, Stefan, CH-2543 Lengnau (CH)
(74) Vertreter: BSB Patentanwälte Schütte & Engelen Partnerschaft mbB

(56) Entgegenhaltungen:
- EP-A2- 2 559 569
- EP-A2- 2 952 768
- US-A1- 2017 045 100

## Beschreibung

Die vorliegende Erfindung betrifft eine Fahrradkomponente für ein wenigstens teilweise muskelbetriebenes Fahrrad und weist wenigstens eine Freilaufeinheit auf, welche eine Freilaufkomponente und eine Federeinheit umfasst. In einfachen Fällen ist die Fahrradkomponente als Freilaufeinheit ausgebildet. In komplexeren Fällen kann die Fahrradkomponente auch einen vollständigen Freilauf umfassen oder zum Beispiel als Nabe ausgebildet sein. Möglich ist der Einsatz der Erfindung auch in einem Tretlager oder an anderen Antriebskomponenten von Fahrrädern, bei denen beispielsweise ein elektrischer Hilfsmotor über eine Freilaufeinrichtung angekoppelt wird.

Obwohl die Erfindung im Folgenden mit Bezug auf den Einsatz an einem Fahrrad beschrieben wird, so kann die erfindungsgemäße Fahrradkomponente auch bei anderen teilweise muskelbetriebenen Fahrzeugen und Zwei- oder Mehrrädern eingesetzt werden, die zum Beispiel über einen elektrischen Hilfsantrieb verfügen. Insbesondere wird die Fahrradkomponente bei sportlichen und vorzugsweise bei semiprofessionellen und/oder professionellen Fahrradkomponenten und Fahrrädern eingesetzt. In allen Ausgestaltungen wird die erfindungsgemäße Fahrradkomponente bei solchen Fahrzeugen und insbesondere Fahrrädern eingesetzt, die im normalen und regelmäßigen bestimmungsgemäßen Betrieb wenigstens teilweise oder insbesondere auch vollständig durch Muskelkraft des Benutzers angetrieben werden.

Im Stand der Technik sind diverse Naben für Fahrräder bekannt geworden, die einen Freilauf aufweisen, damit sich bei zum Beispiel einer Bergabfahrt die Tretkurbel nicht ständig mitdreht. Ein solcher Freilauf bewirkt auch, dass sich das Nabengehäuse und der Rotor beim Rückwärtstreten gegeneinander drehen können.

Im Stand der Technik sind Naben mit Sperrklinkenfreiläufen bekannt geworden, bei denen die Sperrklinken radial zwischen einer Freilaufstellung und einer Eingriffsstellung verschwenken können. Solche Naben verfügen über eine unterschiedliche Anzahl von Sperrklinken, wobei oft vier Sperrklinken symmetrisch auf dem Umfang verteilt angeordnet sind. Die Sperrklinken greifen bei Kraftübertragung in eine Verzahnung im Rotor ein. Durch die relativ geringe Zahl an Sperrklinken ist ein relativ großer Drehwinkel erforderlich, bis beim Antreten wieder ein Drehmoment übertragen wird.

Mit der DE 94 19 357 U1 ist eine Nabe mit einem Zahnscheibenfreilauf bekannt geworden, der zuverlässig und sehr schnell die Antriebskraft von dem Rotor auf das Nabengehäuse überträgt, während andererseits die Reibungsverluste relativ gering sind, wenn der Benutzer die Pedale nicht betätigt. Ein Zahnscheibenfreilauf hat viele Vorteile und ermöglicht ein besonders schnelles Ansprechen des Freilaufs. Bei diesem Freilauf wird über ein Paar von Zahnscheiben ein Vorwärtsdrehmoment des Rotors übertragen, während beim Rückwärtstreten die Zähne axial außer Eingriff kommen. Die bekannte Nabe mit dem bekannten Freilauf funktioniert an sich zufriedenstellend und wird im sportlichen und auch professionellen Bereich eingesetzt. Ein gewisser Nachteil ist allerdings, dass bei den hohen Belastungen der Nabe beispielsweise bei einer Bergauffahrt derartige Biegemomente an der Nabe auftreten können, dass eine leichte Verkippung einer Zahnscheibe auftreten kann, was zu einem größeren Verschleiß der stärker belasteten Zähne führt, sodass die Haltbarkeit begrenzt wird und die Zahnscheiben früh genug ausgetauscht werden müssen, um eine Fehlfunktion zu vermeiden.

Mit der EP 1 121 255 B1 ist eine leichte Nabe mit einem Zahnscheibenfreilauf und einer zuverlässigen Funktion bekannt geworden, wobei eine gleichmäßigere Belastung der Zähne der Zahnscheiben erfolgt. Dazu werden bei dieser Nabe zwei Zahnscheiben eingesetzt, die jeweils axial beweglich sind und die jeweils über eine Feder axial von außen aufeinander zu gedrückt werden. Dadurch werden beide Zahnscheiben schwimmend gelagert und können sich bei zum Beispiel Durchbiegungen der Nabe oder bei sonstigen Belastungen jeweils besser zueinander ausrichten, sodass für eine gleichmäßigere Abnutzung der Zahnscheiben und einen besonders zuverlässigen Betrieb gesorgt wird. Für Wartungszwecke ist eine solche Nabe leicht demontierbar. Bei einer Demontage, Reinigung und anschließenden Montage kann es aufgrund des relativ komplexen Aufbaus aber vorkommen, dass einzelne Teile verloren gehen oder falsch montiert werden
Das Dokument EP2559569 zeigt eine Fahrradkomponente mit den Merkmalen der Präambeln der unabhängigen Ansprüche 1 und 13.

Es ist deshalb die Aufgabe der vorliegenden Erfindung, eine Fahrradkomponente für ein wenigstens teilweise muskelbetriebenes Fahrrad zur Verfügung zu stellen, welche verbesserte Eigenschaften und insbesondere einen einfacheren Aufbau aufweist.

Diese Aufgabe wird durch eine Fahrradkomponente mit den Merkmalen der unabhängigen Ansprüche 1 und 13 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Fahrradkomponente für ein wenigstens teilweise muskelbetriebenes Fahrrad weist wenigstens eine Freilaufeinheit auf, welche eine Freilaufkomponente, eine Stützeinheit und wenigstens eine Federeinheit umfasst. Die Freilaufkomponente weist einen sich um eine zentrale Achse herum erstreckenden und hohl ausgebildeten rohrförmigen Körperabschnitt mit einer unrunden Außenkontur zur drehfesten und axial verschiebbaren Kopplung und eine Stirnfläche mit axialen Eingriffselementen auf. Die Federeinheit drückt die Freilaufkomponente in einer axialen Richtung der zentralen Achse auseinander. Die Freilaufkomponente, die Stützeinheit und die Federeinheit bilden eine vormontierbare und vorzugsweise vormontierte Baugruppe und die Federeinheit ist an der Freilaufkomponente befestigt und die Federeinheit ist an der Stützeinheit befestigt.

Die erfindungsgemäße Fahrradkomponente hat viele Vorteile. Ein erheblicher Vorteil besteht darin, dass die Freilaufkomponente, die Stützeinheit und die Federeinheit eine gemeinsame Baugruppe bilden, die sich um die zentrale Achse, die eine Symmetrieachse bildet, herum erstreckt. Die Federeinheit ist zur Vorbelastung der Freilaufkomponente in einer axialen Richtung der zentralen Achse ausgebildet und ist mit der Freilaufkomponente und der Stützeinheit verbunden und insbesondere direkt daran befestigt. Die Baugruppe aus Freilaufkomponente und Federeinheit und Stützeinheit kann vormontiert werden und ermöglicht so konstantere Betriebsbedingungen, auch wenn eine mit einer solchen Baugruppe ausgerüstete Nabe eines Fahrrads demontiert und wieder zusammengebaut wird. Auch bei dem Erstzusammenbau oder einer Wartung kann eine noch bessere Einhaltung von Toleranzen gewährleistet und somit eine noch bessere Funktion ermöglicht werden.

Die Baugruppe ist kompakt und kleinbauend ausgeführt und benötigt nur einen geringen axialen Bauraum. Insbesondere ist die Federeinheit (vorzugsweise axial vollständig) zwischen der Freilaufkomponente und der Stützeinheit aufgenommen.

Die Stützeinheit stellt auf der axialen Innenseite eine definierte Abstützfläche für die Federeinheit zur Verfügung. Auf der axialen Außenseite stellt die Stützeinheit eine definierte Anschlagfläche für die gesamte Freilaufeinheit zur Verfügung.

Die Montage einer Freilaufeinheit in einer Nabe wird erleichtert, da die Baugruppe insgesamt bei der Montage eingeführt wird. Dadurch können eventuelle Montagefehler durch zum Beispiel ungeübte Benutzer, die eine Nabe nur selten auseinandernehmen und wieder zusammenbauen, weitgehend vermieden. Es kann dauerhaft eine höhere Qualität erzielt werden.

Vorzugsweise ist an der Freilaufkomponente wenigstens ein Aufnahmeabschnitt ausgebildet. Vorzugsweise ist die Federeinheit an dem Aufnahmeabschnitt befestigt. Insbesondere ist die Federeinheit kraftschlüssig und/oder formschlüssig an der Freilaufkomponente aufgenommen. Der Aufnahmeabschnitt der Freilaufkomponente kann insbesondere als Fixierabschnitt ausgebildet sein oder die Freilaufkomponente weist einen Fixierabschnitt auf. Besonders bevorzugt ist die Federeinheit an der Freilaufkomponente und insbesondere an dem Fixierabschnitt der Freilaufkomponente verliersicher befestigt.

Vorzugsweise ist an der Stützeinheit wenigstens ein Stützabschnitt ausgebildet. Vorzugsweise ist die Federeinheit an dem Stützabschnitt befestigt. Insbesondere ist die Federeinheit kraftschlüssig und/oder formschlüssig an der Stützeinheit aufgenommen. Besonders bevorzugt ist die Federeinheit an der Stützeinheit und insbesondere an dem Stützabschnitt der Stützeinheit verliersicher befestigt. Dann ist der Stützabschnitt als Halteabschnitt ausgebildet und kann so bezeichnet werden.

Vorzugsweise ist die Federeinheit lösbar mit der Freilaufkomponente und/oder der Stützeinheit verbunden, um die Federeinheit beispielsweise separat zu reinigen oder auch separat austauschen zu können. Insbesondere kann die Federeinheit ohne Einsatz von Werkzeug von Hand von der Freilaufkomponente und/oder der Stützeinheit getrennt und auch wieder damit verbunden werden.

Eine Freilaufkomponente umfasst den rohrförmigen Körperabschnitt und an einer axialen Außenseite an einer Stirnfläche der Freilaufkomponente axiale Eingriffselemente. In bevorzugten Ausgestaltungen bilden die axialen Eingriffselemente eine Axialverzahnung.

Die Stirnfläche kann senkrecht zu der zentralen Achse und somit senkrecht zu der Symmetrieachse der Freilaufeinheit ausgerichtet sein. Möglich ist es aber auch, dass die Stirnfläche der Freilaufkomponente unter einem spitzen oder stumpfen Winkel zur zentralen Achse angeordnet ist und zum Beispiel kegelförmig bzw. kegelstumpfförmig ausgebildet ist.

Die Freilaufkomponente kann einteilig ausgebildet sein. Es ist aber auch möglich, dass die Freilaufkomponente aus zwei oder mehr fest miteinander verbundenen unterschiedlichen Bauteilen und/oder Materialien besteht.

Die Anzahl der Eingriffselemente bzw. Zähne an der Stirnfläche der Freilaufkomponente ist vorzugsweise größer zwei und insbesondere größer zehn. Vorzugsweise beträgt eine Anzahl der Eingriffselemente zwischen 15 und 90, kann aber auch größer sein. In bevorzugten Ausgestaltungen werden 18, 24, 36, 48, 54 oder 72 Eingriffselemente eingesetzt. Je größer die Zahl der Eingriffselemente, desto geringer ist regelmäßig der nötige Drehwinkel, um beim Antreten aus einem Freilaufzustand wieder den Eingriffszustand herzustellen. Außerdem reduziert sich mit der Anzahl der Eingriffselemente der nötige axiale Weg, den die Freilaufeinheit in axialer Richtung bewegt werden muss, um die Freilaufeinheit in Eingriff mit einer weiteren Freilaufeinheit oder außer Eingriff damit zu bringen. Der nötige axiale Weg reduziert sich, weil die durch den zulässigen Flächendruck erforderliche Fläche mit einer kleineren Zahnhöhe erreicht wird.

Eine Stützeinheit weist in allen Ausgestaltungen vorzugsweise einen ringförmigen und/oder scheibenförmigen Körperabschnitt wie eine Stützscheibe auf, an der sich die Federeinheit abstützt. Insbesondere weist die Stützeinheit eine vollständig umlaufende Stützfläche auf. Möglich ist es aber auch, dass die Stützeinheit bzw. ein ringförmiger und/oder scheibenförmiger Körperabschnitt der Stützeinheit sich nicht vollständig um die zentrale Achse herum erstreckt, sondern nur einen Großteil, z. B. wenigstens 60% oder 75% oder 90%. Der Körperabschnitt kann auch einen oder mehrere (schmale oder breitere) Schlitze aufweisen. Wesentlich ist, dass die Stützeinheit eine dauerhaft definierte Abstützung der Federeinheit ermöglicht und eine dauerhaft definierte Abstützung der gesamten Baugruppe z. B. in einer Nabe.

Vorzugsweise ist auf der axialen Innenseite des scheibenförmigen Körperabschnitts die definierte Abstützfläche für die Federeinheit ausgebildet. Auf der axialen Außenseite des scheibenförmigen Körperabschnitts ist insbesondere eine definierte Anschlagfläche ausgebildet, mit der die Freilaufeinheit insgesamt definiert zum Beispiel in einer Nabe positioniert werden kann.

Besonders bevorzugt ist die Federeinheit axial zwischen der Freilaufkomponente und der Stützeinheit angeordnet. Die Federeinheit stützt sich vorzugsweise mit einem ersten Ende an der Freilaufkomponente und mit einem zweiten Ende an der Stützeinheit ab. Insbesondere ist die Federeinheit axial (vollständig) zwischen der Freilaufkomponente und der Stützeinheit aufgenommen.

Die Baugruppe kann sehr kompakt aufgebaut werden und benötigt nur wenig Bauraum in beispielsweise einer Nabe eines Fahrrads. Dadurch kann der Aufbau einer Nabe insgesamt kompakter ausgestaltet werden, wodurch eine höhere Betriebsfestigkeit und ein geringeres Gewicht einer Nabe erreicht werden können. Insgesamt ist es möglich, dass eine Baulänge in axialer Richtung nur wenig mehr als die axiale Länge der Freilaufkomponente beträgt. Es ist sogar möglich, dass eine axiale Länge der Baugruppe gleich einer axialen Länge der Freilaufkomponente ist.

Eine Baugruppe aus Freilaufkomponente, Federeinheit und Stützeinheit ermöglicht eine einfache Montage an einer Nabe, da die vormontierte Baugruppe nur in die zu montierende Nabe eingelegt werden muss. Durch eine vormontierte Baugruppe wird die Gefahr auch erheblich verringert, dass Einzelteile bei der Montage verloren gehen oder falsch eingelegt werden. Schon eine falsche Orientierung kann zu einem Fehlverhalten führen. Eine fehlerhafte Orientierung der Federeinheit und der Stützeinheit ist durch die vormontierte Baugruppe nicht möglich. Die Montage der Baueinheit an einer Nabe ist praktisch nur eine Orientierung möglich, was Fehler reduziert.

Eine Baugruppe bietet nicht nur bei der Erstmontage, sondern auch nach einer Wartung den Vorteil, dass die Freilaufeinheit als Baugruppe vormontiert in eine Nabe oder ein anderes Antriebsbauteil eingeführt werden kann. Die einzelnen Bauteile der Baugruppe fallen bei der Montage regelmäßig nicht von selbst auseinander. Besonders bevorzugt kann die Freilaufeinheit auch als Baugruppe wieder vollständig aus einer Nabe oder einem anderen Antriebsbauteil entnommen werden, wenn z. B. die Nabe zerlegt und gewartet werden soll. Das gilt insbesondere auch nach einem längeren intensiven und bestimmungsgemäßen Betrieb.

Insbesondere in Einzelfällen kann es aber vorkommen, dass z. B. bei der Demontage die einzelnen Bauteile der Freilaufeinheit bei oder nach einer Demontage nicht genug aneinander haften und sich voneinander trennen.

Ein besserer Halt kann durch die Zugabe des zur Schmierung benötigten Schmiermittels oder eines Schmierstoffes noch erreicht werden. So hält eine Fettmenge z. B. die einzelnen Bauteile bei der Montage in der Regel zuverlässig zusammen, auch wenn die Toleranzen der einzelnen Komponenten ungünstig zueinander ausgebildet sind. Es ist möglich und bevorzugt, dass ein Schmiermittel wie ein Fett zum Befestigen der Federeinheit an der Freilaufkomponente und/oder der Stützeinheit wenigstens beiträgt. Möglich ist es auch, dass ein Klumpen des Schmiermittels den Halt wenigstens für die Montage vollständig bewirkt. Das Schmiermittel verteilt sich dann später im Betrieb selbsttätig.

Besonders bevorzugt bleiben die einzelnen Bauteile nach der Montage einer Baugruppe zu mehr als 75% und insbesondere mehr als 90% und vorzugsweise mehr als 99% kraftschlüssig und/oder formschlüssig aneinander haften. Im Betrieb oder nach längerem Betrieb können sich die einzelnen Teile der Baugruppe auch wieder voneinander trennen, sodass die Federeinheit oder die Stützeinheit gegebenenfalls einzelnen entnommen werden muss. Aber auch dann bietet die erfindungsgemäße Fahrradkomponente noch den Vorteil, dass bei der anschließenden Montage die Baugruppe wieder vormontiert werden kann und selbsttätig oder z. B. durch den Schmierstoff wenigstens für die Montage zusammenhält. Dadurch wird eine Fehlmontage weitgehend vermieden, auch wenn ungeübte Benutzer die Montage durchführen.

Vorzugsweise beträgt ein Hub der Federeinheit weniger als 15 mm und insbesondere weniger als 10 mm. Im tatsächlichen Betrieb in einer Nabe als Fahrradkomponente beträgt der Hub vorzugsweise weniger als 6 mm oder 5 mm oder insbesondere weniger als 2 mm. Besonders bevorzugt beträgt im Betrieb der Hub weniger als 1,5 mm. Unter einem Hub wird hier eine mögliche Axialbewegung bei der axialen Komprimierung der Federeinheit verstanden. Insbesondere wird unter dem Hub eine mögliche Komprimierung und eine axiale Beweglichkeit in Kompressionsrichtung von der Stützeinheit und der Freilaufkomponente relativ zueinander verstanden.

Ein freier axialer Abstand der Stützeinheit zu der Freilaufkomponente beträgt im unbelasteten Zustand vorzugsweise weniger als 8 mm und insbesondere weniger als 6 mm und vorzugsweise weniger als 5 mm. Möglich ist auch ein Hub im unbelasteten Zustand von 4 mm oder weniger. Unter dem freien axialen Abstand der Stützeinheit zu der Freilaufkomponente im unbelasteten Zustand wird ein Abstand verstanden, den beide Teile aufeinander zu bewegt werden können, bevor die Stützeinheit und die Freilaufkomponente auf Block gehen.

Vorzugsweise ist ein freier axialer Abstand der Stützeinheit zu der Freilaufkomponente im typischen eingebauten Zustand z. B. in einer Nabe kleiner als 5 mm und insbesondere kleiner als 3 mm und vorzugsweise kleiner 2 mm und kann insbesondere weniger als 1,5 mm betragen. In einer konkreten Ausgestaltung beträgt der freie axiale Abstand im eingebauten Zustand weniger als 1,1 mm. Der nötige axiale Hub beträgt in dem konkreten Beispiel weniger als 0,75 mm, um die axialen Eingriffselemente außer Eingriff zu bringen. Der freie axiale Abstand der Stützeinheit zu der Freilaufkomponente im eingebauten Zustand hängt von der axialen Höhe der Eingriffselemente (Zahnhöhe) und insbesondere auch von der Anzahl der Eingriffselemente (Zähne) ab.

Eine axiale Höhe der axialen Eingriffselemente beträgt in einer konkreten Ausgestaltung weniger als 0,7 mm. Die konkrete Höhe hängt auch von der Anzahl der Eingriffselemente ab. Insbesondere ist eine Mehrzahl von Eingriffselementen ringförmig angeordnet. Es ist möglich, dass Eingriffselemente in zwei oder mehr konzentrischen Ringen angeordnet sind.

Vorzugsweise reiht sich in Umfangsrichtung Eingriffselement an Eingriffselement bzw. Zahn an Zahn. Es ist aber auch möglich, dass einzelne Eingriffselemente auf dem Umfang fehlen. Beispielsweise kann jedes vierte oder fünfte Eingriffselement fehlen und stattdessen dort eine glatte Fläche vorgesehen sein. Funktionstüchtig ist auch eine solche Freilaufeinheit.

Vorzugsweise beträgt ein Durchmesser der Baugruppe quer zu der zentralen Achse mehr als 24 mm oder 25 mm. Der konkrete Durchmesser hängt vom Anwendungsfall ab und kann auch 28 mm oder 30 mm betragen. Jedenfalls ist der Durchmesser vorzugsweise kleiner als 60 mm und insbesondere kleiner als 40 mm.

Vorzugsweise umfasst die Freilaufkomponente eine quer zu dem rohrförmigen Körperabschnitt ausgebildete Stützfläche zur Abstützung der Federeinheit. Insbesondere ist die Stützfläche an einer radial nach innen ragenden Wandung der Freilaufkomponente ausgebildet. Die Stützfläche kann an der axialen Innenseite der Stirnwand ausgebildet sein. Es ist aber auch möglich, dass die Stützfläche an einer von der Stirnwand beabstandeten Ringwand ausgebildet ist. Beispielsweise kann die Ringwand parallel zu der Stirnwand ausgebildet sein, sodass sich in dem Bereich der Ringwand und der Stirnwand ein in radialer Richtung U-förmiger Querschnitt ergibt. Möglich ist es, dass die Stirnwand und eine solche Ringwand an den gegenüberliegenden Enden der Freilaufkomponente oder beabstandet davon ausgebildet ist. Dann weist die Freilaufkomponente einen U-förmigen Querschnitt auf, wobei die beiden Schenkel des "U" radial nach innen zeigen. Zwischen der Ringwand und der Stirnwand kann in axialer Richtung ein Hohlraum ausgebildet sein. Möglich ist es aber auch, dass die Stirnwand und die Ringwand ineinander übergehen und somit eine massive Freilaufkomponente ausbilden, die über eine zentrale z. B. zylindrische Durchführung verfügt, durch welche die Achse einer Nabe durchgeschoben wird. Die Ringwand kann umlaufend ausgebildet sein, kann aber auch durch zwei oder mehr radial nach innen ragende separate Segmente gebildet werden.

Vorzugsweise ist der Aufnahmeabschnitt an wenigstens einer axialen Aufnahmelasche ausgebildet. Die Aufnahmelasche erstreckt sich insbesondere in axialer Richtung parallel zu der zentralen Achse. Die Aufnahmelasche kann ringförmig ausgebildet sein und sich um die zentrale Achse herum erstrecken. Möglich und bevorzugt ist es auch, dass die Aufnahmelasche auf einer kegelförmigen Fläche ausgebildet oder kegelstumpfförmig ausgebildet ist. Möglich ist es auch, dass an der Aufnahmelasche eine Befestigungsvertiefung ausgebildet ist. Ist die Aufnahmelasche z. B. als umlaufender Aufnahmeflansch ausgebildet, kann der Aufnahmeflansch eine umlaufende Vertiefung aufweisen, an der ein Ende der Federeinheit kraftschlüssig und/oder formschlüssig und insbesondere verliersicher aufgenommen und befestigt ist. Wenn die Aufnahmelasche aus einzelnen Aufnahmeelementen besteht, kann entsprechend auch eine "umlaufende" Vertiefung zur kraftschlüssigen und/oder formschlüssigen und insbesondere verliersicheren Befestigung der Federeinheit ausgebildet sein.

Ein Aufnahmeabschnitt dient insbesondere als Fixierabschnitt zum Fixieren der Federeinheit. Ein Aufnahmeflansch ist insbesondere ein Fixierflansch. Ein Aufnahmeelement ist insbesondere ein Fixierelement zum Fixieren der Federeinheit.

Die Aufnahmelasche kann rohrförmig ausgebildet sein und einen Ringflansch bilden. Vorzugsweise ist der Aufnahmeabschnitt dann an einer radialen Umfangsfläche des Ringflansches (oder der Ringwand) ausgebildet. Der Aufnahmeabschnitt kann auf der radial äußeren Umfangsfläche des Ringflansches oder auch der radial inneren Umfangsfläche des Ringflansches ausgebildet sein.

Insbesondere erstreckt sich die Aufnahmelasche und/oder der Ringflansch im Inneren des rohrförmigen Körperabschnitts von der Stirnwand aus nach hinten, während an dem vorderen axialen Ende auf der Stirnfläche der Stirnwand die Eingriffselemente ausgebildet sind.

Es ist möglich und bevorzugt, dass der Aufnahmeabschnitt mehrere Teilabschnitte an einer Mehrzahl von Aufnahmelaschen oder Aufnahmeelementen umfasst. Die Aufnahmeelemente können dabei als separate Teile ausgebildet sein und zum Beispiel an der Freilaufkomponente fest aufgenommen und zum Beispiel geklemmt sein. Es ist möglich, dass der Aufnahmeabschnitt insgesamt zum Beispiel ringförmig angeordnet ist. Möglich ist es, dass 3, 4, 5, 6 oder mehr Aufnahmeelemente auf dem Umfang verteilt angeordnet sind, an denen jeweils Teilabschnitte des Aufnahmeabschnitts ausgebildet sind. Realisiert werden kann das zum Beispiel auch über einen Ringflansch, an dem über dem Umfang periodisch Ausnehmungen oder Lücken ausgebildet sind. Beispielsweise können Lücken durch maschinelle Bearbeitung wie Fräsen oder dergleichen entstehen. Bei mehreren Aufnahmeelementen kann eine punktuelle Klemmung der Federeinheit an einer entsprechenden Anzahl von Teilabschnitten oder Fixierstellen erfolgen.

Derartige Aufnahmeelemente können beispielsweise als axiale Stifte an der inneren Stirnwand ausgebildet sein. Möglich ist es auch, dass radiale Stifte von innen an dem rohrförmigen Körperabschnitt ausgebildet oder darin eingeschoben sind. Möglich ist es auch, dass ein separater Einsatz mit axialen oder radialen Stiften oder Aufnahmeelementen in die Freilaufkomponente eingeschoben und dort fixiert wird (z. B. über einen Presssitz oder Kleben). Dann umfasst die Baugruppe neben der Freilaufkomponente der Federeinheit und der Stützeinheit auch noch einen Einsatz mit Aufnahmeelementen oder einem Ringflansch oder dergleichen mehr.

In bevorzugten Weiterbildungen ist der Aufnahmeabschnitt an einer Innenwandung des rohrförmigen Körperabschnitts in einem Längsabschnitt mit geringerem lichten Durchmesser ausgebildet, um die Federeinheit radial innen klemmend aufzunehmen. In dem sich anschließenden Längsabschnitt ist ein deutlich größerer lichter Durchmesser ausgebildet als der Außendurchmesser der Federeinheit in dem Bereich, damit eine störungsfreie Funktion beim Komprimieren und Entspannen der Federeinheit gewährleistet werden kann. In allen Ausgestaltungen wird bei der Federbewegung ein Kontakt (des aktiven Abschnittes) der Federeinheit mit der Freilaufkomponente außerhalb des Aufnahmeabschnittes vermieden. Auch eine formschlüssige Aufnahme eines Abschnittes der Federeinheit an einem Innenumfang bzw. an einer Innenwandung des rohrförmigen Körperabschnitts ist möglich und bevorzugt.

Es ist möglich, dass der Aufnahmeabschnitt wenigstens einen Gewindegang zum Verschrauben der Federeinheit mit der Freilaufkomponente umfasst. Dabei ist es möglich, dass die Federeinheit außen oder innen auf einen entsprechenden Gewindegang der Freilaufkomponente auf bzw. eingeschraubt wird. Denkbar ist es auch, dass die Federeinheit in einen Gewindegang eingeschraubt wird, um die Federeinheit an der Freilaufkomponente zu fixieren.

In allen Ausgestaltungen ist es bevorzugt, dass die Stützeinheit eine Stützscheibe und wenigstens eine Stützlasche umfasst. Die Stützlasche kann als umlaufender Stützflansch ausgebildet sein. Die Stützlasche bzw. der Stützflansch können unmittelbar oder mittelbar an der Stützscheibe ausgebildet sein. Die Stützscheibe und die Stützlasche sind fest miteinander verbunden und sind insbesondere einteilig ausgebildet. Möglich ist es auch, dass die Stützlasche und die Stützscheibe separate und miteinander verbundene Bauteile sind. An der Stützlasche wird die Federeinheit kraftschlüssig und/oder formschlüssig und insbesondere verliersicher aufgenommen.

Unter dem Begriff "verliersicher" wird im Sinne der vorliegenden Anmeldung eine Befestigungsstärke verstanden, bei der sich die verliersicher verbundenen Teile im normalen Gebrauch bei der Montage, insbesondere auch bei der Demontage und vorzugsweise im (normalen) Betrieb regelmäßig nicht voneinander trennen. Eine Trennung der Teile ist jedenfalls mit Werkzeug möglich und ist vorzugsweise auch von Hand ohne Einsatz von Werkzeug möglich.

Die Stützscheibe dient zur Abstützung der Freilaufeinheit an einem anderen Teil wie zum Beispiel einem radialen Absatz in einer Nabe oder an einem Lager.

Vorzugsweise ist die Stützlasche als Stützflansch ausgebildet und ist insbesondere zur radial äußeren Klemmung der Federeinheit ausgebildet. Denkbar ist es auch, dass die Federeinheit an einer radial inneren Umfangsfläche oder an einer radial inneren Fläche einer Stützlasche oder mehrerer Stützlaschen geklemmt oder auf eine andere Art befestigt ist. Auch hier ist es möglich, dass die Federeinheit mit der Stützlasche oder dem Stützflansch verschraubt oder über eine andere Art verbunden ist.

Vorzugsweise sind mehrere Stützelemente insbesondere an dem Umfang der Stützscheibe ausgebildet. Die Stützelemente können ringförmig auf dem Umfang angeordnet sein. Die Stützelemente können einstückig mit der Stützscheibe ausgebildet sein. Möglich ist es auch, dass die Stützelemente als separate Teile mit der Stützscheibe verpresst sind.

Eine Ausgestaltung, bei der ein Ende der Federeinheit radial außen auf zwei oder mehr Aufnahmelaschen oder einem umlaufenden Aufnahmeflansch an der Freilaufkomponente aufgenommen ist und bei der das andere Ende der Federeinheit radial außen auf zwei oder mehr Aufnahmelaschen oder einem umlaufenden Aufnahmeflansch an der Stützeinheit aufgenommen ist besonders bevorzugt. Eine solche Ausgestaltung ist sehr vorteilhaft, da es unter allen Betriebsbedingungen zuverlässig verhindert wird, dass ein Ende oder ein sonstiger Abschnitt der Federeinheit sich radial nach innen hin bewegt. Dadurch kann zuverlässig verhindert werden, dass sich ein Ende einer Federeinheit an einem Wälzlager einer Nabe abstützt. Ohne eine derartige Ausgestaltung kann es passieren, dass die (als Spiralfeder oder dergleichen ausgebildete) Federeinheit nach innen ausweicht, wenn bei der Montage oder im Betrieb ungeeignete Bedingungen z. B. durch einen unerfahrenen Benutzer auftreten. Eine fehlerhafte Montage nach einer Wartung kann zu einem unzuverlässigen Betrieb führen. Wenn sich z. B. die Federeinheit aber nach einer fehlerhaften Montage an einer Abdichtung des Wälzlagers abstützt, liegen undefinierte Bedingungen vor, unter denen ein einwandfreier Betrieb nicht gewährleistet werden kann.

Besonders bevorzugt wird eine einzelne Federeinheit eingesetzt. Die Federeinheit weist vorzugsweise einen Federkörper auf, der sich um die zentrale Achse herum erstreckt. Der Federkörper ist insbesondere zur Vorbelastung der Freilaufkomponente in einer axialen Richtung der zentralen Achse ausgebildet. Möglich ist es auch, das zwei oder mehr Federeinheiten eingesetzt werden.

Die Federeinheit ist vorzugsweise als Spiralfeder mit wenigstens einer um die zentrale Achse herum umlaufenden Windung ausgebildet. Die Federeinheit kann kegelstumpförmig ausgebildet sein.

Vorzugsweise ist die Federeinheit als insbesondere zylindrische Spiralfeder ausgebildet. Das ermöglicht reproduzierbare Bedingungen. Möglich ist dadurch auch eine geringe Bauraumgröße. Insbesondere beträgt ein Außendurchmesser der Federeinheit größer 15 mm und insbesondere größer 20 mm. Vorzugsweise liegt ein Durchmesser einer Windung zwischen 0,25 mm und 3 mm und insbesondere zwischen 0,5 mm und 2 mm. Vorzugsweise ist ein Verhältnis eines maximalen Außendurchmessers der Federeinheit zu einem Durchmesser einer Windung kleiner 50 und ist insbesondere größer 15. Vorzugsweise liegt das Verhältnis zwischen 20 und 40.

Vorzugsweise besteht die Federeinheit vollständig oder wenigstens im Wesentlichen aus einem metallischen Material und vorzugsweise Stahl.

Möglich und bevorzugt ist es auch, dass die Federeinheit als Wellenfeder ausgebildet ist oder eine solche umfasst. Auch eine Wellenfeder kann eine, zwei oder mehr umlaufende Windungen aufweisen. Möglich ist es auch, dass die Federeinheit zwei oder mehr miteinander gekoppelte oder verbundene Federelemente umfasst. Möglich ist es, dass die Federeinheit zwei gleichsinnig oder gegensinnig umlaufende Spiralfederelemente umfasst. An Schnittpunkten können die Federelemente miteinander verbunden sein.

In bevorzugten Ausgestaltungen ist wenigstens ein Ende der Windung bzw. ein Windungsende der Federeinheit radial nach innen und/oder nach außen umgebogen. Durch ein Umbiegen eines Endes der Windung der Federeinheit kann eine nochmals festere Klemmung an der Freilaufkomponente und/oder der Stützeinheit erzielt werden.

Möglich und bevorzugt ist es auch, dass die Stützeinheit und die Federeinheit einteilig oder einstückig ausgebildet sind. Ein axiales Ende der Federeinheit kann einstückig in die Stützeinheit übergehen oder eine solche ausbilden.

Für eine weitere erfindungsgemäße Fahrradkomponente ist es die Aufgabe, eine zuverlässigere Montage zu ermöglichen und beispielsweise eine Nabe zu ermöglichen, die eine zuverlässigere Funktion ermöglicht.

Eine solche erfindungsgemäße Fahrradkomponente ist für ein wenigstens teilweise muskelbetriebenes Fahrrad vorgesehen. Die Fahrradkomponente umfasst wenigstens eine Freilaufeinheit und ist in einfachen Ausgestaltungen als Freilaufeinheit ausgebildet. Die Freilaufeinheit umfasst eine Freilaufkomponente und eine Federeinheit und eine Stützeinheit und wenigstens eine sich zwischen der Stützeinheit und der Freilaufkomponente abstützende Federeinheit auf bzw. umfasst eine Federeinheit, welche die Stützeinheit und die Freilaufkomponente in einer axialen Richtung der zentralen Achse auseinanderdrückt. Die Freilaufkomponente weist einen sich um eine zentrale Achse herum erstreckenden und hohl ausgebildeten rohrförmigen Körperabschnitt mit einer unrunden Außenkontur zur drehfesten und axial verschiebbaren Kopplung und eine Stirnfläche mit axialen Eingriffselementen auf. Die Federeinheit weist einen Federkörper auf. Der Federkörper erstreckt sich insbesondere um die zentrale Achse herum. Die Stützeinheit weist eine sich axial in Richtung der Freilaufkomponente erstreckende Sicherungseinrichtung auf und/oder die Freilaufkomponente weist eine sich axial in Richtung der Stützeinheit erstreckende Schutzeinrichtung auf, um ein Abrutschen eines Endes der Federeinheit radial nach innen hin zu verhindern.

Eine solche erfindungsgemäße Fahrradkomponente hat viele Vorteile. In solchen Ausgestaltungen, bei denen durch bauliche Maßnahmen ein Abrutschen eines Federendes nach innen hin vermieden wird, können Fehlfunktionen einer derart ausgerüsteten Nabe vermieden werden. Eine Fehlfunktion kann z. B. auftreten, wenn die Freilaufeinheit benachbart zu einem Wälzlager oder Kugellager angeordnet ist. Drückt sich durch ungeschickte Montage eines unerfahrenen Benutzers ein Ende einer Spiralfeder radial nach innen hin, so kann sich das Ende der Spiralfeder direkt auf den Wälzkörpern oder einer zum Schutz derselben angebrachten Dichteinheit abstützen. In beiden Varianten werden die Wälzkörper zusätzlich belastet, die Reibung ist erhöht und ein ordnungsgemäßer Betrieb kann nicht gewährleistet werden. Das verhindert die erfindungsgemäße Fahrradkomponente zuverlässig.

Durch eine Sicherungseinrichtung und/oder eine Schutzeinrichtung wird jeweils zuverlässig vermieden, dass z. B. eine Windung einer Spiralfeder oder ein Teil einer Federeinheit nach innen abrutscht. Das gilt sowohl für eine Federeinheit, deren Federkörper sich (vollständig) um die Achse herum erstreckt als auch für den Einsatz mehrerer kleinerer Federeinheiten, die auf dem Umfang verteilt angeordnet sind und jeweils einen z. B. dünnen Federkörper aufweisen.

In bevorzugten Weiterbildungen umfasst die Sicherungseinrichtung an der Stützeinheit einen Stützflansch oder Stützelemente, die ein Abrutschen eines Endes der Federeinheit nach innen verhindern. Der Stützflansch kann auch als Sicherungsflansch bezeichnet werden. Einzelne Sicherungs- oder Stützelemente können insbesondere eingesetzt werden, wenn die Federeinheit sich vollständig um die Achse herum erstreckt.

Der Stützflansch muss die Federeinheit nicht permanent abstützen. Es reicht aus, wenn der Stützflansch die Federeinheit nur dann abstützt, wenn sich das Ende radial nach innen hin bewegt.

Vorzugsweise liegt die Federeinheit auf dem Stützflansch oder den Stützelementen mittelbar und vorzugsweise unmittelbar auf.

Es ist bevorzugt, dass die Schutzeinrichtung an der Freilaufkomponente einen Aufnahmeflansch oder Aufnahmeelemente umfasst, die ein Abrutschen eines Endes der Federeinheit nach innen hin verhindern. Der Aufnahmeflansch kann auch als Schutzflansch bezeichnet werden. An dem Aufnahmeflansch muss ein Ende der Federeinheit nicht permanent aufgenommen sein. Es ist möglich, dass im normalen Betriebszustand ein radialer Abstand vorliegt. Wesentlich ist, dass das zugehörige Ende der Federeinheit aufgenommen bzw. abgestützt wird, wenn sich bei einer Fehlmontage oder im Betrieb das Ende der Federeinheit radial nach innen hin bewegen sollte. Dann können undefinierte Bedingungen zuverlässig vermieden werden, die sich durch ein undefiniertes radiales Ausweichen des Endes der Federeinheit ergeben.

Der Aufnahmeflansch ist praktisch ein Schutzflansch, an dem die Federeinheit aber nicht immer direkt anliegend aufgenommen bzw. abgestützt werden muss. Der Aufnahmeflansch nimmt die Federeinheit oder deren Ende auf und stützt das Ende jedenfalls dann ab, wenn das Ende nach innen abzurutschen droht.

Vorzugsweise erstreckt sich eine Schutzeinrichtung oder eine Sicherungseinrichtung über eine axiale Länge, die größer ist als wenigstens eine Hälfte einer Stärke einer Wandung der Federeinheit. Bei einer Spiralfeder wird die axiale Länge der Sicherungseinrichtung vorzugsweise wenigstens so bemessen, dass die axiale Länge der Sicherungseinrichtung größer ist als ein vollständiger mittlerer Durchmesser der Wandung der Federeinheit oder als ein Durchmesser in der Nähe des Endes oder an dem Ende der Windung der Federeinheit. Insbesondere beträgt die axiale Länge wenigstens das 1,25fache oder das l,5fache des mittleren Durchmessers.

Vorzugsweise ist zwischen der Schutzeinrichtung an der Freilaufkomponente und dem rohrförmigen Körperabschnitt ein umlaufender und im Ergebnis etwa nutförmiger Aufnahmeraum für ein Ende der Federeinheit mit z. B. U-förmigen Querschnitt ausgebildet.

Es ist möglich, dass zwischen der Schutzeinrichtung und der Federeinheit und/oder zwischen der Sicherungseinrichtung und der Federeinheit ein freier radialer Abstand besteht.

Es ist aber auch möglich und bevorzugt, dass die Federeinheit an einem Ende direkt an der Schutzeinrichtung und/oder an dem anderen Ende direkt an der Sicherungseinrichtung anliegt. Möglich und bevorzugt ist es auch, dass die Federeinheit mit einem Ende direkt mit der Schutzeinrichtung und/oder mit dem anderen Ende direkt mit der Sicherungseinrichtung verbunden und insbesondere daran befestigt ist.

In einer bevorzugten Weiterbildung aller zuvor beschriebenen Ausgestaltungen umfasst die Fahrradkomponente ein gegenüber einer Nabenachse drehbar gelagertes Nabengehäuse und einen drehbar gelagerten Rotor. In einer solchen Ausgestaltung kann die Fahrradkomponente als Nabe ausgestaltet sein. Der Rotor ist zur Aufnahme wenigstens eines Ritzels und insbesondere zur Aufnahme einer Mehrzahl von Ritzeln und/oder zur Aufnahme wenigstens eines Ritzelpaketes ausgebildet. Es können beispielsweise 7, 8, 9, 10 oder 11 oder mehr Ritzel oder Zahnkränze an dem Rotor drehfest aufgenommen werden. Die Ritzel können einzeln und/oder als Zahnkranzpaket montiert werden.

Vorzugsweise umfasst die Fahrradkomponente weiterhin eine Freilaufeinrichtung mit zwei miteinander zusammenwirkenden Freilaufkomponenten, nämlich eine nabenseitige Freilaufkomponente und eine rotorseitige Freilaufkomponente. Die beiden Freilaufkomponenten weisen jeweils axiale Eingriffselemente zum Eingriff ineinander auf. Die nabenseitige Freilaufkomponente ist drehfest mit dem Nabengehäuse verbunden. Die rotorseitige Freilaufkomponente ist drehfest mit dem Rotor verbunden und ist in axialer Richtung relativ zu dem Rotor und dem Nabengehäuse wenigstens zwischen einer Freilaufstellung und einer Eingriffsstellung bewegbar. Wenigstens eine der Freilaufkomponenten ist Bestandteil einer Freilaufeinheit, wie sie zuvor beschrieben wurde.

In einer solchen Ausgestaltung ist die Fahrradkomponente insbesondere als Nabe ausgebildet und umfasst eine Freilaufeinrichtung und wenigstens eine zuvor definierte Freilaufeinheit. Möglich ist es auch, dass die Freilaufeinrichtung zwei gleichartige oder identische Freilaufeinheiten umfasst, die miteinander zusammenwirken.

In bevorzugten Ausgestaltungen ist die nabenseitige Freilaufkomponente anders ausgestaltet als die rotorseitige Freilaufkomponente.

Die nabenseitige Freilaufkomponente ist vorzugsweise mit dem Nabengehäuse über ein mehrgängiges Gewinde mit wenigstens zwei separaten und axial voneinander beabstandeten Gewindegängen verbunden. Das bedeutet, dass eine Gewindeverbindung zwischen der nabenseitigen Freilaufkomponente und dem Nabengehäuse über wenigstens zwei separate und axial voneinander beabstandete Gewindegänge verfügt. Insbesondere verfügt die nabenseitige Freilaufkomponente über wenigstens zwei separate und axial voneinander beabstandete Gewindegänge, die mit (Form und insbesondere Anzahl) entsprechend passenden Gewindegängen in das Nabengehäuse verschraubt sind. Durch eine solche Konstruktion wird eine größere Steigung der Gewindegänge ermöglicht. Der Steigungswinkel ist größer und damit ist die im verschraubten Zustand wirksame Axialkraft geringer. Dadurch wird weniger Druck auf das Nabengehäuse ausgeübt. Möglich ist es, dass die Anzahl der Gewindegänge an der nabenseitigen Freilaufkomponente und am Nabengehäuse unterschiedlich ist, sofern die Form und Anordnung der Gewindegänge entsprechend passend ist. Beispielsweise kann die nabenseitige Freilaufkomponente ein mehrgängiges Außengewinde mit zwei Gewindegängen und z. B. einer umlaufenden (Rechteck-) Nut aufweisen, sodass drei umlaufende Strukturen vorhanden sind. Eine solche Struktur kann in ein Innengewinde mit drei Gewindegängen eingeschraubt werden, auch wenn dann nur zwei Gewindegänge greifen und zur Stabilität beitragen.

In allen Ausgestaltungen ist es bevorzugt, dass wenigstens ein Gewindegang eine Steigung von wenigstens 1,8 mm oder 2, 0 mm oder von wenigstens 2,5 mm und insbesondere von wenigstens 3 mm und vorzugsweise von wenigstens 3,5 mm oder von 4 mm oder von 5 mm oder von 6 mm oder mehr aufweist. Insbesondere ist die Steigung größer als die Anzahl der Gewindegänge multipliziert mit 1, 0 mm und vorzugsweise 1, 5 mm. Die Steigung ist folglich bei zwei Gewindegängen vorzugsweise größer 2 mm (3 mm) und bei drei Gewindegängen vorzugsweise größer 3 mm (4,5 mm).

Es kann bei einer Steigung, die größer ist (z. B. 1, 5 mm oder 2 mm) als im Stand der Technik (z. B. 1 mm) dennoch ein feineres Gewinde eingesetzt werden, wodurch der Gewindering bzw. die nabenseitige Freilaufkomponente noch besser in dem Nabengehäuse geführt wird. Dadurch wird die Freilaufkomponente noch besser zentriert. Außerdem sind die Axialkräfte aufgrund der geänderten geometrischen Bedingungen geringer.

Im Betrieb wird die nabenseitige Freilaufkomponente durch das Antriebsdrehmoment in Verschraubungsrichtung gedrängt, wodurch die Antriebskräfte zu einem zunehmenden Druck auf das Nabengehäuse und innerhalb des Nabengehäuses führen. Das Nabengehäuse wird aber aus Gewichtsgründen regelmäßig aus einem leichten Material gefertigt. Zudem werden die Wandstärken möglichst weit reduziert, um das Gewicht und den Windwiderstand (geringere Querschnittsfläche) zu verringern.

Beides führt dazu, dass sich das Nabengehäuse aus dem Stand der Technik durch die auftretenden Belastungen lokal verformen kann. Bei fehlerhafter oder knapper Dimensionierung kann es bei hohen Belastungen zum Bruch des Nabengehäuses aus dem Stand der Technik kommen, wodurch eine hohe Verletzungsgefahr besteht. Die Alternative eines festeren Werkstoffs führt zu mehr Gewicht oder deutlich höheren Kosten.

Diese Konstruktion bietet einen erheblichen Vorteil, da die wirksamen Axialkräfte spürbar reduziert werden. Durch ein zweigängiges (oder dreigängiges) oder n-faches Gewinde wird der Steigungswinkel verdoppelt (verdreifacht) oder mit "n" multipliziert, während die Teilung gleich bleibt. Insgesamt sind die in axialer Richtung axial nach innen in das Nabengehäuse (oder ein anderes Gehäuse) wirkenden Kräfte erheblich geringer, sodass keine oder doch wenigstens eine deutlich geringere Verformung des Nabengehäuses auftritt. Die Wandstärke kann reduziert werden und gleichzeitig kann die Sicherheit erhöht werden. Die Kräfte zur Deformierung des Lagersitzes sind kleiner. Damit werden bei hohen Belastungen bessere Fahreigenschaften erzielt.

Die Selbsthemmung wird reduziert, was ebenfalls vorteilhaft für die Belastung ist. Die Selbsthemmung des Gewindes ist aber noch groß genug. Ein eigenständiges Lösen muss nicht befürchtet werden. Außerdem ist das Lösen erheblich einfacher, wenn eine nabenseitige Freilaufkomponente entfernt oder getauscht werden muss.

In der nabenseitigen Freilaufkomponente sind vorzugsweise Wälzkörper definiert aufgenommen, um das Nabengehäuse gegenüber der Nabenachse zu lagern.

Insbesondere ist in der nabenseitigen Freilaufkomponente ein Lagersitz ausgebildet, um ein Wälzlager zur Lagerung des Nabengehäuses definiert aufzunehmen. Dann ist die nabenseitige Freilaufkomponente drehfest und in axialer Richtung fest mit dem Nabengehäuse verbunden. Die rotorseitige Freilaufkomponente ist dann hingegen drehfest und axial beweglich in dem Rotor aufgenommen.

Vorzugsweise ist in dem Rotor eine unrunde Innenkontur ausgebildet, welche eine drehfeste Aufnahme und axiale Verschiebbarkeit der rotorseitigen Freilaufkomponente ermöglicht. Vorzugsweise schließt sich an die unrunde Innenkontur ein Hinterstich an, in dem ein Ring zur Zentrierung der Stützeinheit aufgenommen sein kann. Ein Zentrierring für die Stützeinheit kann z. B. eingespart werden, wenn ein ausreichender Halt der Komponenten der Baugruppe untereinander vorliegt und bei der Montage die Freilaufeinheit als komplette Baugruppe zentriert eingeführt werden kann.

Es ist besonders bevorzugt, dass in dem Nabengehäuse ein Befestigungsabschnitt und ein Zentrierabschnitt ausgebildet sind. Vorzugsweise sind an der nabenseitigen Freilaufkomponente ein Befestigungsbereich und ein Zentrierbereich ausgebildet. Besonders bevorzugt ist der Befestigungsbereich mit dem Befestigungsabschnitt verschraubt und der Zentrierbereich wird an dem Zentrierabschnitt zentriert. Dadurch wird eine Zentrierung der nabenseitigen Freilaufkomponente an der Aufnahme im Nabengehäuse gewährleistet. Die Reproduzierbarkeit erhöht sich erheblich, insbesondere wenn in der der nabenseitigen Freilaufkomponente ein Lagersitz ausgebildet und ein Wälzlager aufgenommen ist.

Vorzugsweise ist eine radiale Toleranz zwischen der nabenseitigen Freilaufkomponente und dem Nabengehäuse an dem Befestigungsabschnitt größer als an dem Zentrierabschnitt. An dem Zentrierabschnitt und dem Zentrierbereich liegt vorzugsweise eine Spielpassung mit vorzugsweise weniger als 20 µm oder weniger als 5 µm Toleranz vor. Der Zentrierabschnitt und der Zentrierbereich bilden insbesondere eine Übergangspassung oder Presspassung aus.

In besonders bevorzugten Ausgestaltungen verfügen der Befestigungsabschnitt und der Befestigungsbereich jeweils über zwei, drei oder mehr Gewindegänge, welche miteinander verschraubt sind. Insbesondere sind die Gewindegänge parallel und benachbart zueinander ausgerichtet. Eine Verschraubung über ein mehrgängiges Gewinde bietet erhebliche Vorteile.

Vorzugsweise verfügt der Befestigungsbereich über ein mehrgängiges Außengewinde mit Gewindegängen, welche in Gewindegänge eines mehrgängigen Innengewindes an dem Befestigungsabschnitt des Nabengehäuses eingeschraubt ist.

Die nabenseitige Freilaufkomponente weist besonders bevorzugt einen axialen Körperabschnitt mit einem inneren zentrischen Aufnahmeraum und einem daran ausgebildeten Lagersitz und ein daran aufgenommenes Wälzlager zur drehbaren Lagerung des Nabengehäuses auf.

Vorzugsweise ist an der Stirnseite des axialen Körperabschnitts ein Anschlag ausgebildet, der im montierten Zustand an einem radialen Absatz des Nabengehäuses anliegt.

In einer bevorzugten Weiterbildung umfasst die nabenseitige Freilaufkomponente einen nach innen ragenden Ringflansch, wobei an der axialen Außenseite des Ringflansches die Eingriffselemente ausgebildet sind.

In dem Nabengehäuse ist vorzugsweise ein radialer Absatz zur definierten axialen Ausrichtung des in der nabenseitigen Freilaufkomponente aufgenommenen Wälzlagers ausgebildet.

Vorzugsweise ist zwischen dem in der nabenseitigen Freilaufkomponente aufgenommenen Wälzlager und der axialen Innenseite des Ringflansches ein freier Abstand ausgebildet.

In allen Ausgestaltungen ist es möglich, dass die Federeinheit der Freilaufeinheit nicht genau eine, sondern z. B. zwei Federn umfasst, die als konzentrische Spiralfedern und/oder Wellenfedern ausgebildet sind und sich jeweils um die zentrale Achse herum erstrecken. Es ist auch möglich, dass die Federeinheit als elastische Federhülse ausgebildet ist oder eine solche umfasst, die sich um die zentrale Achse herum erstreckt. Die Federeinheit kann sich vollständig um 360° um die zentrale Achse herum erstrecken. Es ist aber auch möglich, dass sich die Federeinheit einstückig nur um einen kleineren Winkelbetrag um die zentrale Achse herum erstreckt, beispielsweise um 330° oder 300°, jedenfalls aber um mehr als 180° und insbesondere um mehr als 270°.

Die unrunde Außenkontur der Freilaufkomponente der Freilaufeinheit ist insbesondere dazu ausgebildet, in einem Antriebsbauteil eines Fahrrads drehfest und axial verschiebbar aufgenommen zu werden.

Eine weitere nicht beanspruchte Fahrradkomponente ist für ein wenigstens teilweise muskelbetriebenes Fahrrad vorgesehen und umfasst wenigstens eine Freilaufeinheit, welche eine Freilaufkomponente und eine Federeinheit umfasst, wobei die Freilaufkomponente einen sich um eine zentrale Achse herum erstreckenden und hohl ausgebildeten rohrförmigen Körperabschnitt mit einer unrunden Außenkontur zur drehfesten und axial verschiebbaren Kopplung und eine Stirnfläche mit axialen Eingriffselementen aufweist, und wobei die Federeinheit einen Federkörper aufweist, der sich um die zentrale Achse herum erstreckt und zur Vorbelastung der Freilaufkomponente in einer axialen Richtung der zentralen Achse dient, wobei die Freilaufkomponente und die Federeinheit eine vormontierte Baugruppe bilden und wobei an der Freilaufkomponente wenigstens ein Fixierabschnitt ausgebildet ist, an welchem die Federeinheit befestigt ist.

Noch eine weitere nicht beanspruchte Fahrradkomponente ist für ein wenigstens teilweise muskelbetriebenes Fahrrad vorgesehen und umfasst wenigstens eine Freilaufeinheit, welche eine Freilaufkomponente und eine Federeinheit umfasst, wobei die Freilaufkomponente einen sich um eine zentrale Achse herum erstreckenden und hohl ausgebildeten rohrförmigen Körperabschnitt mit einer unrunden Außenkontur zur drehfesten und axial verschiebbaren Kopplung und eine Stirnfläche mit axialen Eingriffselementen aufweist, wobei eine Stützeinheit umfasst ist, und wobei die Federeinheit einen Federkörper aufweist, der sich um die zentrale Achse herum erstreckt und der dazu ausgebildet ist, die Freilaufkomponente und die Stützeinheit in einer axialen Richtung der zentralen Achse auseinanderzudrücken, wobei die Freilaufkomponente und die Stützeinheit eine vormontierte Baugruppe bilden, und wobei an der Stützeinheit wenigstens ein Befestigungsabschnitt ausgebildet ist, an welchem die Federeinheit befestigt ist. In Weiterbildungen können diese Fahrradkomponenten weitere Merkmale umfassen, wie zuvor beschrieben.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: einen Schnitt durch eine Nabe;
- Figur 4: ein vergrößertes Detail des Schnittes aus Figur 3;
- Figur 5: eine Explosionsdarstellung der Nabe nach Figur 3;
- Figur 6: eine Freilaufeinheit der Nabe nach Figur 3;
- Figur 7: eine perspektivische geschnittene Darstellung der Freilaufeinheit nach Figur 6;
- Figur 8: eine andere Freilaufeinheit für eine Nabe nach Figur 3;
- Figur 9: eine nabenseitige Freilaufkomponente der Nabe nach Figur 3;
- Figur 10: eine Seitenansicht der nabenseitigen Freilaufkomponente nach Figur 9;
- Figur 11: eine schematische Prinzipskizze eines Details aus Figur 3; und
- Figur 12: eine andere Nabe in einem stark schematischen Querschnitt.

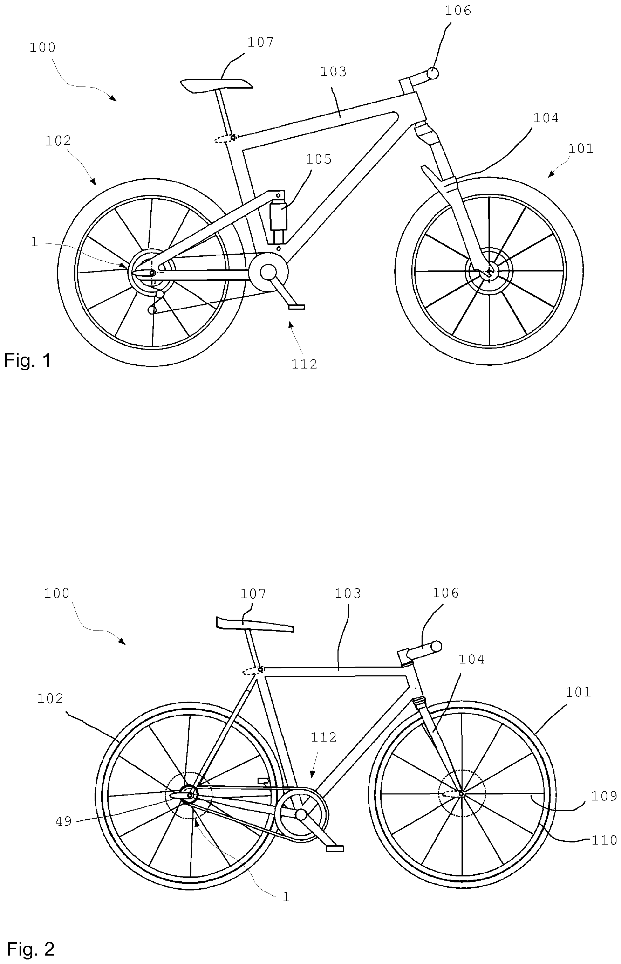

In den Figuren 1 und 2 sind jeweils ein Mountainbike bzw. ein Rennrad 100 dargestellt, die jeweils mit erfindungsgemäßen Fahrradkomponenten 80 ausgerüstet sind. Das Rennrad und das Mountainbike verfügen jeweils über ein Vorderrad 101 und ein Hinterrad 102, die mit Naben 1 ausgerüstet sind. Die beiden Räder 101, 102 verfügen über Speichen 109 und eine Felge 110. Es können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Als Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 1 der Räder kann jeweils über eine Steckachse oder einen Schnellspanner 49 an dem Rahmen befestigt sein.

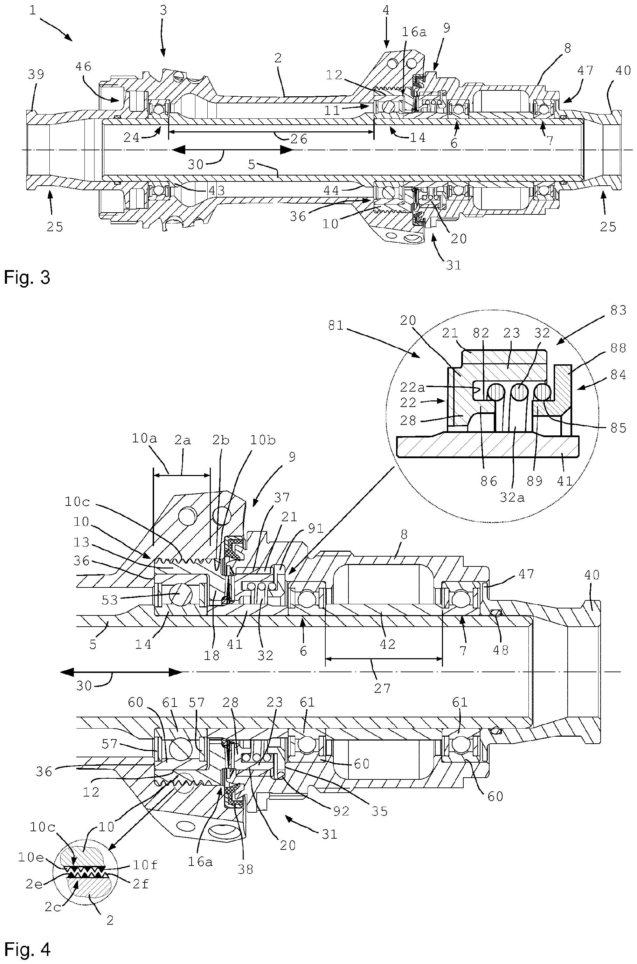

Mit Bezug auf die Figuren 3 bis 11 wird eine Nabe 1 gemäß einem ersten Ausführungsbeispiel erläutert.

Die in den Fahrrädern gemäß Figur 1 und 2 jeweils am Hinterrad 102 eingesetzten Naben 1 zeigt Figur 3 in einem Schnitt, während Figur 4 ein vergrößertes Detail aus Figur 3 darstellt.

Die Nabe 1 als erfindungsgemäße Fahrradkomponente umfasst ein Nabengehäuse 2, welches in den axialen Endbereichen 3 und 4 jeweils über Wälzlager 24 bzw. 14 drehbar gegenüber und hier unmittelbar drehbar auf einer Nabenachse 5 gelagert ist. Das bedeutet, dass die Wälzlager 14, 24 hier jeweils direkt auf der Nabenachse 5 angeordnet sind.

Die Nabe 1 umfasst des Weiteren einen Rotor 8, an dem wenigstens ein Ritzel anzuordnen ist. Insbesondere kann dort ein Ritzelpaket aufgeschoben und befestigt bzw. angeordnet werden. Zwischen dem Rotor 8 und dem Nabengehäuse 2 ist eine Freilaufeinrichtung 9 mit zwei Freilaufkomponenten 10, 20 vorgesehen. Dabei ist die nabenseitige Freilaufkomponente 10 und die rotorseitige Freilaufkomponente 20 umfasst. Die rotorseitige Freilaufkomponente 20 ist Teil einer Freilaufeinheit 81, die als eine einfache erfindungsgemäße Fahrradkomponente 80 ausgebildet ist.

Um den Eintritt von Wasser und Staub in das Innere der Nabe 1 und insbesondere um den Zutritt von Wasser und Staub zu der Freilaufeinrichtung 9 zu vermeiden, ist zwischen dem Rotor 8 und dem Nabengehäuse 2 eine Dichteinrichtung 38 ausgebildet, die hier einen labyrinthartigen Dichtspalt und eine nachgeschaltete Lippendichtung umfasst, die berührend an dem Rotor 8 anliegt und den Freilauf 9 zuverlässig vor dem Eintritt von Schmutz und Wasser schützt.

An den beiden Enden sind Endanschläge 39 bzw. 40 auf die Nabenachse aufgeschoben, die - wenn das damit ausgerüstete Laufrad nicht im Rahmen eingespannt ist - über O-Ringe 48 auf der Nabenachse gesichert werden. An den Endanschlägen 39 und 40 ist jeweils ein Dichtflansch 46 bzw. 47 vorgesehen, die die Enden der Nabe 1 vor dem Eintritt von Schmutz und Wasser schützen. Hier ist an dem rotorseitigen Endanschlag 40 ein radialer Dichtflansch 47 vorgesehen, während am anderen Endanschlag 39 ein Doppelflansch 46 ausgebildet ist, der aus zwei umlaufenden radialen Dichtflanschen besteht, zwischen denen ein axialer Abstand und Freiraum ausgebildet ist.

Die beiden Endanschläge 39 und 40 verfügen jeweils über eine Verjüngung 25, die als Griffmulde dient und das Abziehen eines Endanschlags 39, 40 von der Achse 5 nach dem Ausbau eines Rades vereinfacht.

Die Wälzlager 14, 24 zur drehbaren Lagerung des Nabengehäuses 2 stützen sich an radialen Absätzen an Verdickungen 43, 44 der Nabenachse 5 ab. Die Verdickungen 43 und 44 befinden sich jeweils axial nach innen von den (Nabengehäuse-) Lagern 14, 24.

In allen Ausgestaltungen der Nabe 1 ist an den Verdickungen 43, 44 die radiale Wandstärke der Nabenachse 5 vorzugsweise etwas größer. Insbesondere beträgt die radiale Wandstärke dort zwischen etwa dem 1, 5 fachen und dem dreifachen der radialen Wandstärke in den anderen Bereichen. Abgesehen von den Verdickungen 43, 44 ist die Nabenachse 5 im Wesentlichen hohlzylindrisch ausgebildet und weist Unterschiede in der Wandstärke vorzugsweise kleiner 20 % und insbesondere kleiner 15 % oder kleiner 10 % oder kleiner 5 % oder kleiner 2 % auf. Vorzugsweise ist ein Verhältnis von maximalem Außendurchmesser der Nabenachse (inklusive Verdickung) zu minimalem Innendurchmesser der Nabenachse kleiner als 2, 0 und insbesondere kleiner als 1, 75 und vorzugsweise kleiner als 1,6. Vorzugsweise ist das Verhältnis von maximalem Außendurchmesser der Nabenachse zu minimalem Innendurchmesser der Nabenachse größer als 1, 25 und insbesondere größer als 1, 4. Vorzugsweise ist die innere Durchgangsöffnung der Nabenachse zylindrisch ausgebildet und weist über wenigstens dem wesentlichen Teil der Länge oder der vollständigen Länge einen konstanten freien inneren Durchmesser auf.

Der Rotor 8 wird hier über zwei Rotorlager 6 und 7 drehbar und hier unmittelbar auf der Achse 5 abgestützt.

Das Wälzlager 14 ist innerhalb der nabenseitigen Freilaufkomponente 10 aufgenommen und befindet sich dort in einem zentrischen Aufnahmeraum 11 definiert an einem Lagersitz 12. Dadurch kann erheblicher axialer Bauraum eingespart werden, wodurch die Stabilität und Steifigkeit der Nabe vergrößert werden kann. Außerdem wird das Gesamtgewicht der Nabe 1 erheblich reduziert. Sowohl das Gewicht der einzelnen Freilaufkomponenten als auch das Gewicht des Nabengehäuses können reduziert werden, da die Wandstärke in dem rotorseitigen Endbereich 4 des Nabengehäuses 2 reduziert werden kann.

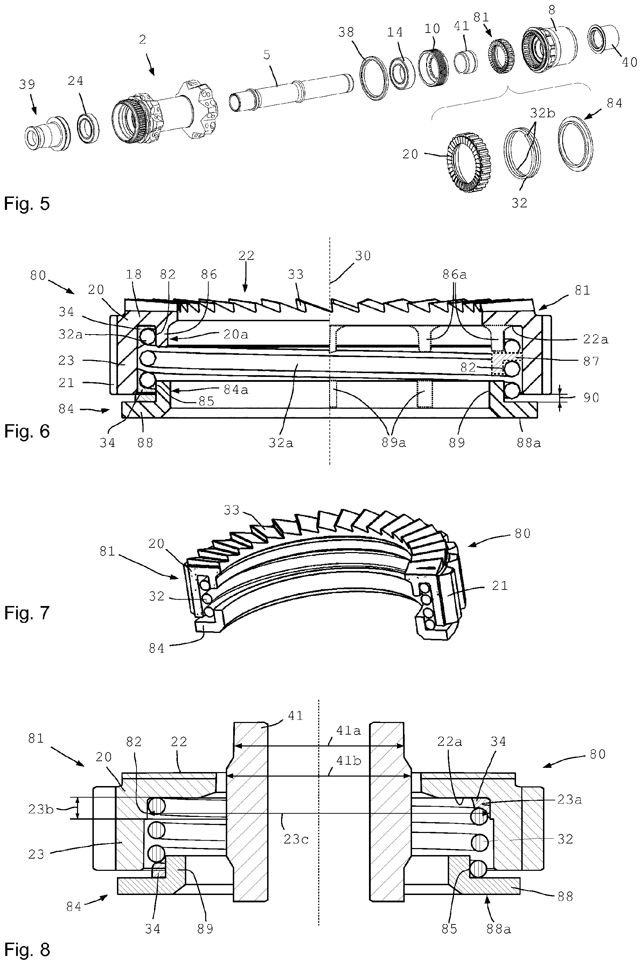

Figur 4 zeigt ein vergrößertes Detail aus Figur 3, wobei auch hier die Freilaufeinrichtung 9 in der Eingriffsstellung 31 dargestellt ist, in der die insbesondere als Axialverzahnungen ausgebildeten Eingriffselemente 33, (vergleiche Figur 7) der Freilaufkomponente 10 und der Freilaufkomponente 20 im drehfesten Eingriff miteinander stehen. Die Eingriffselemente 33 sind dabei derart ausgestaltet, dass bei einer Drehrichtung in Antriebsrichtung zuverlässig ein Drehmoment auf das Nabengehäuse übertragen wird, während bei einer entgegengesetzten Drehrichtung die Freilaufkomponente 20 axial gegen die Vorbelastungskraft der Federeinheit 32 nach außen gedrückt wird, bis die Eingriffselemente 33 außer Eingriff geraten, sodass eine Relativdrehung von Rotor zu Nabengehäuse möglich ist. Die rotorseitige Freilaufkomponente 20 verfügt über einen rohrförmigen Körperabschnitt 23 mit einer unrunden Außenkontur 21. Die unrunde Außenkontur 21 kämmt mit einer angepassten unrunden Innenkontur 37 in dem Rotor und ist parallel zur axialen Richtung der zentralen Achse bzw. Symmetrieachse 30 in dem Rotor 8 axial verschiebbar.

Die nabenseitige Freilaufkomponente 10 weist hier im radialen Querschnitt eine etwa L-förmige Ausgestaltung auf, bei der ein axialer und rohrförmiger Körperabschnitt 13 in einem Befestigungsbereich 10a mit einem mehrgängigen Außengewinde 10c versehen ist, der in ein Innengewinde 2c an dem Befestigungsabschnitt 2a in dem Nabengehäuse eingeschraubt ist, sodass die Freilaufkomponente 10 axial fest und in Antriebsrichtung drehfest mit dem Nabengehäuse 2 verbunden ist. Das kleine Detail unten links von Figur 4 zeigt die beiden Gewindegänge 2e und 2f bzw. 10e und 10f der mehrgängigen Gewinde 2c bzw. 10c in dem Nabengehäuse 2 bzw. der nabenseitigen Freilaufkomponente 10.

Zur definierten radialen Positionierung der nabenseitigen Freilaufkomponente 10 und des darin aufgenommenen Wälzlagers 14 dient der Zentrierabschnitt 2b, in welchem der Zentrierbereich 10b der nabenseitigen Freilaufkomponente 10 passgenau aufgenommen ist. Insbesondere ist die Passung nahezu spielfrei. Es kann sich auch um eine Presspassung handeln, sodass die nabenseitige Freilaufkomponente 10 während des Einschraubens in das Nabengehäuse 2 eingepresst wird.

Radial innerhalb des axialen Körperabschnitts 13 ist ein zylindrischer Lagersitz 12 ausgebildet, an dem das rotorseitige Wälzlager 14 zur drehbaren Lagerung des Nabengehäuses 2 aufgenommen ist. Das Wälzlager 14 wird im montierten Zustand in axialer Richtung mit seinem Innenring 61 formschlüssig zwischen der Verdickung 44 und dem Hülsenkörper 41 aufgenommen.

Der Kraftschluss in axialer Richtung 30 erfolgt von dem Endanschlag 40 über den Innenring des Rotorlagers 7, den Hülsenkörper 42, den Innenring des Rotorlagers 6, den Hülsenkörper 41, den Innenring des Wälzlagers 14 und wird dann über die radiale Verdickung 44 in die Nabenachse 5 eingeleitet und von dort über die radiale Verdickung 43 auf den Innenring des Wälzlagers 24 übertragen, von wo die Einspannkraft über den Endanschlag 39 schließlich wieder abgeleitet wird.

Im montierten Zustand liegt das innere Ende der nabenseitigen Freilaufkomponente an einem radialen Absatz 36 innerhalb des Nabengehäuses 2 an. An diesem Absatz 36 liegt im montierten Zustand hier auch der Außenring 60 des Wälzlagers 14 an.

Das Wälzlager 14 weist einen freien Abstand 16a zu der Innenseite des Ringflansches 18 der nabenseitigen Freilaufkomponente 10 auf.

Die Wälzlager 14, 24 und auch die Rotorlager 6, 7 verfügen vorzugsweise jeweils über eine Dichteinheit 57 zur Abdichtung der Wälzlager. Die Wälzlager 14, 24 und die Rotorlager 6, 7 weisen jeweils Wälzkörper 53 auf.

Die mehrgängige Gewindeverbindung zwischen dem Nabengehäuse und der nabenseitigen Freilaufkomponente 10 übt weniger Axialkräfte auf das Nabengehäuse aus, als eine eingängige Schraubverbindung mit gleicher Teilung. Das liegt daran, dass der Steigungswinkel des Gewindegangs erheblich größer ist und dadurch kleinere Axialkräfte resultieren. Auch die Demontierbarkeit wird erleichtert, da die Selbsthemmung geringer ist. Durch die geringeren Axialkräfte bedingt, wird das Nabengehäuse weniger belastet. Die Wandstärken können bei gesteigerter Haltbarkeit verringert werden.

Die rotorseitige Freilaufkomponente 20 weist an der Stirnseite 22 einen rotorseitigen Ringflansch 28 mit den dort ausgebildeten Eingriffselementen 33 auf. Der rotorseitige Ringflansch 28 ist insbesondere einstückig mit dem rohrförmigen Körperabschnitt 23 ausgebildet.

Durch die Konstruktion kann der Abstand 26 zwischen den Wälzlagern 14, 24 zur Lagerung des Nabengehäuses deutlich vergrößert werden. Ebenso kann der Abstand 27 zwischen den Rotorlagern 6 und 7 deutlich vergrößert werden. Dadurch wird die Stabilität und Steifigkeit der Nabe 1 insgesamt gesteigert.

Das vergrößerte Detail oben rechts in Figur 4 zeigt einen Schnitt durch die Freilaufeinheit 81 und den auf der Nabenachse angeordneten Hülsenkörper 41. Die Freilaufeinheit 81 ist als vormontierte Baugruppe 83 ausgeführt und umfasst die Freilaufkomponente 20, eine Federeinheit 32 als Vorbelastungseinrichtung und eine Stützeinheit 84. Die hier als Spiralfeder ausgebildete Federeinheit 32 erstreckt sich mit dem Federkörper rings um die zentrale Achse 30 herum. Dadurch ergibt sich eine Spiralfeder mit einem großen Durchmesser. An einem Ende der Windung ist die Federeinheit 32 mit der Freilaufkomponente 20 fest und verliersicher verbunden und an dem anderen Ende ist die Spiralfeder 32 mit der Stützeinheit 84 fest und verliersicher verbunden. Hier ist die Spiralfeder jeweils kraftschlüssig an die Freilaufkomponente 20 bzw. die Stützeinheit 84 angekoppelt. Die Verbindungskraft ist ausreichend, damit bei der Montage und vorzugsweise im normalen Betrieb und auch bei der Demontage die Baugruppe zuverlässig erhalten bleibt und nicht auseinanderfällt, während andererseits eine Demontage per Hand ermöglicht wird.

Die Freilaufkomponente 20 weist hier in radialer Richtung einen etwa L-förmigen Querschnitt auf. Der lange Schenkel des "L" wird durch den rohrförmigen Körperabschnitt 23 gebildet. Der kurze und hier radial nach innen zeigende Schenkel des "L" wird durch die Stirnseite 22 der Freilaufkomponente 20 gebildet. Auf der Stirnseite sind die Eingriffselemente 33 ausgebildet. An dem Ringflansch 18, der nach vorn die Stirnseite 22 zur Verfügung stellt, ist axial nach hinten hin eine Aufnahmelasche 86 angeordnet, die hier insbesondere als umlaufender Aufnahmeflansch 86 ausgebildet ist. Der Aufnahmeflansch 86 erstreckt sich von der axialen Innenseite des Ringflansches (auch Stirnflansch genannt) aus hülsenförmig nach hinten. Der hülsenförmige Körper verläuft etwa konzentrisch zu dem rohrförmigen Körperabschnitt 23. Der Aufnahmeflansch 86 kann zylindrisch ausgebildet sein, kann aber auch konische Abschnitte aufweisen, um z. B. das Aufschieben zu erleichtern oder einen besseren Halt zu gewährleisten.

Hier wird auf der radialen Außenseite des umlaufenden Aufnahmeflansches 86 ein Aufnahmeabschnitt 82 zur Befestigung der Federeinheit 32 zur Verfügung gestellt. Die Federeinheit 32 wird mit einem Windungsende bzw. Windungsabschnitt auf den Aufnahmeflansch 86 aufgeschoben und dort kraftschlüssig gehalten. Zum besseren Halt kann das vordere Ende der Federeinheit 32 radial nach innen oder außen umgebogen sein, um einen festeren Halt an dem Aufnahmeflansch 86 zu erzielen. Dazu kann am Windungsende eine Länge von 2 bis 5 mm leicht umgebogen sein.

Auf der radialen Außenseite und/oder Innenseite des umlaufenden Aufnahmeflansches 86 kann eine umlaufende Mulde ausgebildet sein, die zur formschlüssigen Aufnahme des Endes der Federeinheit 32 dient.

Die Federeinheit 32 stützt sich typischerweise am vorderen Ende über wenigstens ein Teil des Umfangs an der Innenfläche (Stützfläche) 22a des Ringflansches 18 ab.

An dem anderen Ende der Federeinheit 32 stützt sich wenigstens ein Teil einer Windung 32a oder doch wenigstens ein Windungsende 32b an der Stützeinheit 84 ab, die eine Stützscheibe 88 und eine Stützlasche 89 umfasst. Die Stützlasche 89 kann als umlaufender Stützflansch ausgebildet sein. Auf der Stützlasche bzw. dem Stützflansch 89 liegt hier auf der radialen Außenseite wenigstens ein Windungsabschnitt der Federeinheit 32 kraftschlüssig und/oder formschlüssig an. Eine Klemmung kann darüber erzielt werden, dass der Durchmesser der Federeinheit 32 vor der Montage ein wenig kleiner als der Außendurchmesser des Stützflansches ist. Möglich ist es aber auch, dass das Ende der Windung leicht radial nach innen umgebogen ist, um dort eine bessere Klemmung zu erzielen. Möglich ist es auch, dass an dem Stützflansch eine (wenigstens teilweise) umlaufende Mulde ausgebildet ist, an der das Ende der Federeinheit 32 formschlüssig aufgenommen ist.

Auf der axialen Außenseite stützt sich die Stützeinheit beispielsweise an einem radialen Absatz 35 in dem Rotor 8 ab, um eine zuverlässige Ableitung der auftretenden Kräfte zu ermöglichen. Bei der Fertigung des Rotors und der Ausbildung der unrunden Innenkontur 37 des Rotors, die eine drehfeste Aufnahme und axiale Verschiebbarkeit der rotorseitigen Freilaufkomponente 20 ermöglicht, wird regelmäßig ein Hinterstich in Form einer Nut 91 eingefügt. Die Nut 91 schließt sich axial an die unrunde Innenkontur 37 an und wird schließlich durch den Absatz 35 begrenzt. In der Nut 91 kann ein Ring 92 zur Zentrierung der Stützeinheit 84 aufgenommen sein, wie es die untere Hälfte von Figur 4 zeigt. Der Ring 92 kann dazu beitragen, bei der Montage eine Zentrierung der Freilaufeinheit 81 zu bewirken oder zu fördern. In vielen Fällen ist der Einsatz eines derartigen Ringes 92 nicht mehr nötig, da die Baugruppe 83 sich selbst durch die unrunde Außenkontur 21 in der unrunden Innenkontur 37 zentriert.

Figur 5 zeigt eine perspektivische Explosionsdarstellung der einzelnen Bauteile der Nabe 1. Am linken Ende ist der Endanschlag 39 abgebildet. Es schließen sich danach nach rechts hin das Wälzlager 24 zur Lagerung des Nabengehäuses 2 und die Nabenachse 5 an. Es folgt die Dichteinrichtung 38 zur Dichtung zwischen dem Nabengehäuse und dem Rotor, das Wälzlager 14, die nabenseitige Freilaufkomponente 10, der Hülsenkörper 41, die Freilaufeinheit 81 und der Rotor 8 sowie der rotorseitige Endanschlag 40.

Vergrößert darunter sind die einzelnen Bauteile der Freilaufeinheit 81 abgebildet, die zusammen die Baugruppe 83 ergeben. Die Freilaufeinheit 81 besteht aus der Freilaufkomponente 20, der Federeinheit 32, von der hier die Windungsenden 32a zu erkennen sind, und der Stützeinheit 84, die zusammen montiert eine vormontierte Baugruppe 83 ergeben, die bei der Montage insgesamt in die Nabe eingelegt wird.

Figur 6 zeigt einen Querschnitt durch eine Freilaufeinheit 81 als Fahrradkomponente 80. Dabei sind rechts und links von der zentralen Achse 30 leicht unterschiedliche Versionen der Freilaufeinheit 81 abgebildet.

Die Freilaufeinheit 81 umfasst jedenfalls eine Freilaufkomponente 20, eine Federeinheit 32 und eine Stützeinheit 84, die zu einer Baugruppe 83 miteinander verbunden sind. Die Federeinheit 32 ist an einem ersten Ende an einem Aufnahmeabschnitt 82 der Freilaufkomponente 20 befestigt. Der Aufnahmeabschnitt 82 kann an einem umlaufenden Aufnahmeflansch 86 ausgebildet sein.

Möglich ist es auch, dass der Aufnahmeabschnitt 82 aus mehreren Teilabschnitten besteht, die an einzelnen Aufnahmelaschen 86 ausgebildet sind, die über dem Umfang der Freilaufkomponente 20 angeordnet sind. Beispielsweise können an bestimmten Winkelabschnitten Aufnahmelaschen bzw. Aufnahmeelemente 86 vorhanden sein. Einzelne Aufnahmeelemente 86a sind auf der rechten Hälfte von Figur 6 dargestellt, während ein umlaufender Aufnahmeflansch 86 in der linken Hälfte von Figur 6 angedeutet ist.

Möglich ist es auch, dass eine Aufnahmelasche oder ein umlaufender Aufnahmeflansch an einer separaten Ringwand 87 ausgebildet ist, die parallel zu der Stirnwand 22 verläuft und beabstandet dazu angeordnet ist. Eine solche Ringwand 87 kann anstelle des Ringflansches 18 auch zur Abstützung und zur verliersicheren Befestigung der Federeinheit 32 dienen.

An der Stützeinheit 84 ist es ebenso möglich, dass ein umlaufender Stützflansch 89 einen umlaufenden Stützabschnitt 85 zur Verfügung stellt, wie in der linken Hälfte von Figur 6 angedeutet.

In der rechten Hälfte von Figur 6 sind einzelne Stützelemente oder Stützlaschen 89 dargestellt, die insgesamt einen entsprechenden Stützabschnitt 85 zur Verfügung stellen.

Möglich sind unterschiedliche Kombinationen von einzelnen Elementen und umlaufenden Flanschen.

Eingezeichnet ist in Figur 6 auch der maximale Hub 90, den die Freilaufeinheit in axialer Richtung 30 komprimiert werden kann, bevor die Freilaufkomponente 20 und die Stützeinheit 84 auf Block gehen. Der Hub 90 ist im Ausführungsbeispiel im eingebauten und damit vorgespannten Zustand kleiner als 2 mm und kann je nach Anzahl und Ausgestaltung der Eingriffselemente 33 auch größer oder kleiner sein. Die nötige Axialbewegung, um die Eingriffselemente 33 von der Eingriffs- in die Freilaufstellung zu bringen, beträgt hier weniger als 1 mm. Im vormontierten aber noch nicht eingebauten Zustand ist ein Hub von 4 mm, 5mm, 6 mm oder auch 10 mm oder 12 mm oder mehr möglich.

Auf der Rückseite der Stützeinheit 84 ist eine Anlagefläche 88a zu erkennen, mit der sich die Freilaufeinheit 20 an dem Absatz 35 in dem Rotor abstützt. Dadurch werden exakt definierte Bedingungen erreicht.

In der Regel hält die Federeinheit 32 an der Freilaufkomponente 20 ohne weitere Hilfsmittel aufgrund der aufeinander abgestimmten Abmessungen. Es kann aber auch geplant sein oder sich bei ungünstigen Toleranzen ergeben, dass die Federeinheit 32 nicht von selbst an der Freilaufkomponente 20 haftet. In solchen Fällen kann das Ende der Federeinheit 32 z. B. vor der Montage nach einer Wartung oder bei der Erstmontage über etwas Schmiermittel 34 befestigt oder "angeklebt" werden.

Das Schmiermittel 34, wie ein Fett oder dergleichen, kann z. B. lokal (vorzugsweise über wenigstens einen Abschnitt) in die umlaufende Nut zwischen dem Aufnahmeflansch 86 und der Innenwandung 23a des rohrförmigen Körperabschnittes 23 eingeführt werden.

Ebenso kann eine geeignete Menge von Schmiermittel 34 auf die Stützeinheit 84 aufgebracht werden, um die Federeinheit an dem anderen Ende mit der Stützeinheit zu verbinden bzw. diese daran zu befestigen. Möglich ist es auch, dass (nur) auf ein Ende oder auf beide Enden der Federeinheit eine geeignete Menge Schmiermittel 34 aufgetragen wird.

Das Schmiermittel 34 ist in Figur 6 schraffiert an den beiden Enden der Federeinheit beispielhaft eingezeichnet. Mit dem Schmiermittel haftet dann die Federeinheit 32 für die Montage ausreichend sicher an der Freilaufkomponente und/oder der Stützeinheit. Wenigstens für die Montage ergibt sich dann eine Baueinheit, deren einzelne Teile ausreichend fest miteinander verbunden sind.

Die Stützeinheit weist eine sich axial in Richtung der Freilaufkomponente erstreckende Sicherungseinrichtung 84a auf und die Freilaufkomponente weist eine sich axial in Richtung der Stützeinheit erstreckende Schutzeinrichtung auf, jeweils um ein Abrutschen eines Endes der Federeinheit nach innen hin zu verhindern. Sonst könnte sich das axial äußere Ende der Federeinheit 32 an der Dichtung 57 an dem Rotorlager 6 aus Fig. 3 abstützen. Das würde Druck auf die Wälzkörper ausüben und die Dichtung und die sonstige Funktion beeinträchtigen. Die Sicherungseinrichtung 84a ist hier als Stützflansch 89 ausgebildet oder umfasst mehrere Stützelemente 89a.

Die Schutzeinrichtung 20a an der Freilaufkomponente 20 umfasst einen Aufnahmeflansch 86 oder mehrere Aufnahmeelemente 86a, die am anderen Ende der Federeinheit 32 das Abrutschen nach innen hin verhindern.

Die Schutzeinrichtung 20a und eine Sicherungseinrichtung erstrecken sich jeweils über eine axiale Länge, die größer ist als die Hälfte des Durchmessers und vorzugweise größer ist als der Durchmesser des Körpers einer Windung 32a der Federeinheit 32.

Figur 7 zeigt eine geschnittene perspektivische Ansicht der Freilaufeinheit 81, in der anschaulich der kompakte Aufbau erkennbar wird. Die komplette Freilaufeinheit 81 ist in axialer Richtung nur wenig länger als die Freilaufkomponente 20 mit der Axialverzahnung.

Ein Verhältnis einer axialen Länge einer Freilaufeinheit 81 zu einer axialen Länge einer Freilaufkomponente der Freilaufeinheit ist im montierten Zustand in einer Nabe 1 in allen Ausgestaltungen vorzugsweise kleiner als 3:2 und insbesondere kleiner als 4:3 und besonders bevorzugt kleiner als 5:4 oder kleiner als 6:5. Das ist vorteilhaft, da die Freilaufkomponente zur axialen Führung eine gewisse Länge benötigt und andererseits eine geringere Gesamtlänge eine bessere Abstützung einer Nabe ermöglicht.

Figur 8 zeigt eine andere Ausgestaltung einer Freilaufeinheit 81 in einem schematischen Querschnitt. Die Freilaufeinheit 81 verfügt wieder über eine Freilaufkomponente 20 und eine als Spiralfeder ausgeführte Federeinheit 32 und auch eine Stützeinheit 84. Die Federeinheit 32 ist an einem Ende kraftschlüssig an der Freilaufkomponente 20 aufgenommen und an dem anderen Ende kraftschlüssig mit der Stützeinheit 84 verbunden, sodass eine vormontierte Baugruppe 83 zur Verfügung gestellt wird.

Hier klemmt ein Teil einer Windung 32 der Federeinheit 32 an einem Längsabschnitt 23b an der Innenwandung 23a des rohrförmigen Körperabschnitts 23 der Freilaufkomponente 20. Der Aufnahmeabschnitt 82 wird hier durch die Innenwandung 23a in dem Längsabschnitt 23b mit hier etwas kleinerem Innendurchmesser 23c zur Verfügung gestellt.

Zusätzlich eingezeichnet ist hier auch der Hülsenkörper 41, der sich auch im fertig montierten Zustand einer Nabe 1 radial innerhalb von der Freilaufeinheit 81 befindet. Der Hülsenkörper 41 verfügt über zwei Durchmesserabschnitte mit Durchmessern 41a und 41b. An den Enden ist die Wandstärke jeweils etwas geringer, um Gewicht einzusparen. Im zentralen Bereich ist die Wandstärke etwas größer.

Auch in Figur 8 ist an der Freilaufkomponente 20 und an der Stützeinheit 84 jeweils eine Menge an Schmiermittel 34 schraffiert eingezeichnet, welches geeignet aufgetragen werden kann, wenn die einzelnen Komponenten nicht an sich schon aneinander haften, weil z. B. die Toleranzen im Einzelfall ungünstig sind. Eine geeignete Menge Schmiermittel 34 an geeigneten Stellen führt zu einer Baugruppe 83, die wenigstens für die Montage ausreichend fest aneinander haftet, sodass eine reproduzierbare Montage gewährleistet werden kann.

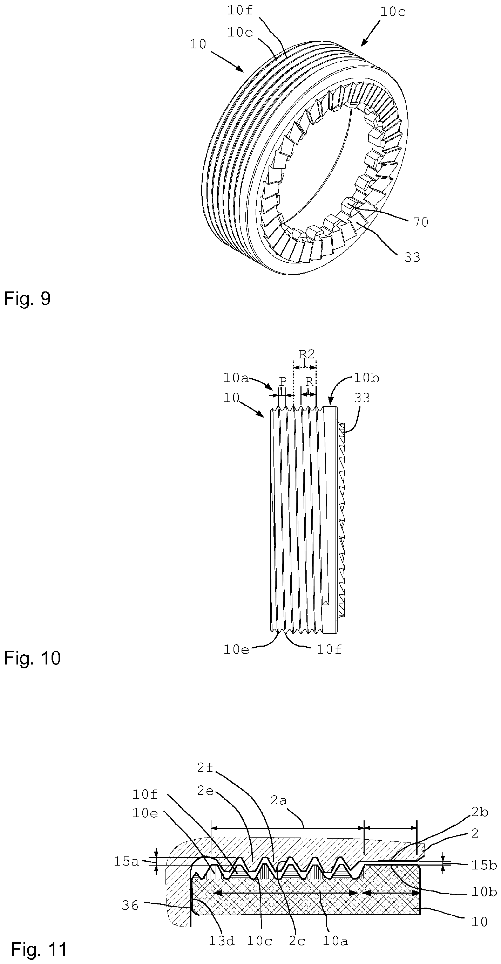

Figur 9 zeigt eine perspektivische Darstellung der nabenseitigen Freilaufkomponente 10, die über ein mehrgängiges Außengewinde 10c mit zwei Gewindegängen 10e und 10f verfügt, mit denen die Freilaufkomponente 10 in das Nabengehäuse 10 eingeschraubt wird. An der Vorderseite sind die axialen Eingriffselemente 33 zu erkennen. Radial nach innen ist eine Innenkontur 70 zu erkennen, die zur Demontage der nabenseitigen Freilaufkomponente 10 dient, um die nabenseitige Freilaufkomponente 10 aus dem Nabengehäuse 2 wieder herausschrauben zu können. Eine Werkzeugkontur 70 ist vorzugsweise in allen Ausgestaltungen und Ausführungsbeispielen ausgebildet. Die Werkzeugkontur 70 kann unterschiedliche Formen aufweisen, beispielsweise die gezeigte Kontur. Möglich sind aber auch ein Innenpolygon oder geeignete Vertiefungen.

Figur 10 zeigt eine Seitenansicht der nabenseitigen Freilaufkomponente 10, wobei der Befestigungsbereich 10a mit dem mehrgängigen Gewinde und der Zentrierbereich 10b zu erkennen sind. In dem Befestigungsbereich 10a ist das mehrgängige Gewinde mit der Teilung P und der Steigung R abgebildet. Die einzelnen Gewindegänge 10e und 10f sind zu erkennen.

Figur 11 zeigt einen schematischen Querschnitt, wobei die Verschraubung der nabenseitigen Freilaufkomponente 10 mit dem Nabengehäuse 2 stark schematisch und vergrößert dargestellt ist. Zu erkennen sind die einzelnen Gewinde 2e, 2f bzw. 10e und 10f in dem Nabengehäuse bzw. der nabenseitigen Freilaufkomponente 10 und die Länge des Befestigungsabschnitts 2a bzw. Befestigungsbereichs 10a sowie die korrespondierende Länge des Zentrierabschnitts 2b und des Zentrierbereiches 10b. In dem Zentrierabschnitt 2b ist eine Toleranz 15a erheblich kleiner als eine Toleranz 15b in dem Befestigungsabschnitt 2a.

Am axial inneren Ende stößt das vordere Ende 13d des axialen Körperabschnitts 13 gegen den radialen Absatz 36 im Nabengehäuse 2 an, sodass ein definierter Sitz der nabenseitigen Freilaufkomponente 10 erreicht wird.

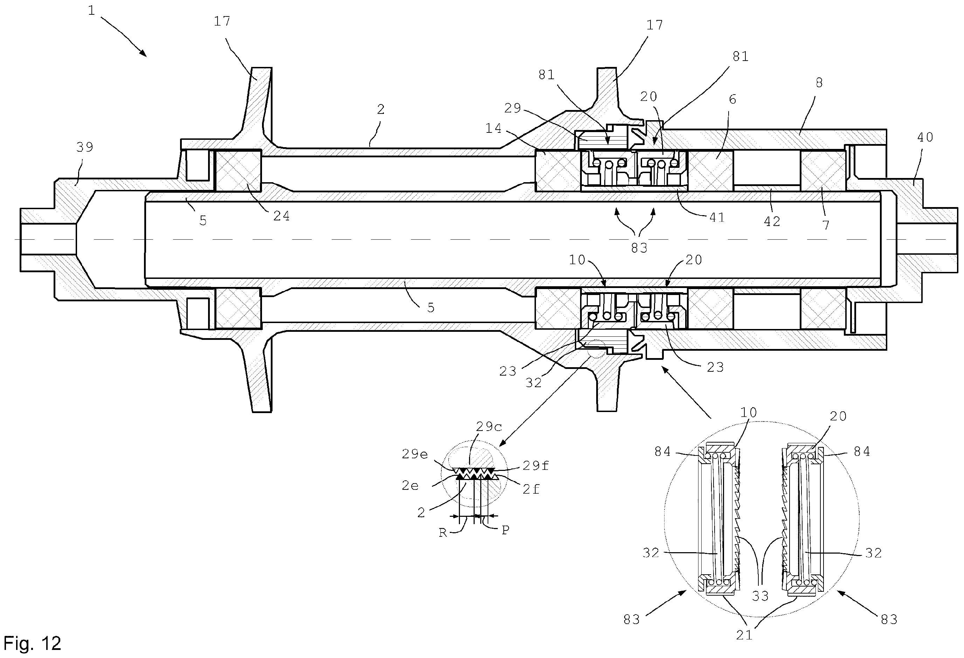

Figur 12 zeigt ein weiteres Ausführungsbeispiel einer Nabe 1, die hier zwei identische Freilaufeinheiten 81 aufweist.

Die in einem schematischen Schnitt dargestellte Nabe 1 verfügt über ein Nabengehäuse 2 und eine Nabenachse 5, auf die an den Enden Endanschläge 39 bzw. 40 aufgeschoben sind. Zur drehbaren Lagerung des Nabengehäuses dienen Wälzlager 24 bzw. 14 und zur drehbaren Lagerung des Rotors werden Rotorlager 6 und 7 eingesetzt. Alle Lager sind hier als Wälzlager ausgeführt. Der axiale Abstand der Nabenlager 14 und 24 ergibt sich über die Absätze an den radialen Verdickungen auf der Nabenachse 5. Zwischen den Rotorlagern 6 und 7 ist ein Hülsenkörper 42 angeordnet und zwischen dem Rotorlager 6 und dem rotorseitigen Nabenlager 14 ist ein Hülsenkörper 41 angeordnet.

Zur Befestigung von Speichen dienen Speichenflansche 17.

Die Freilaufeinrichtung 9 umfasst hier 2 identische Freilaufeinheiten 81. Jede Freilaufeinheit 81 umfasst eine Freilaufkomponente 10 bzw. 20, eine Federeinheit 32 und eine Stützeinheit 84.

Die Federeinheit 32 ist mit ihren Enden jeweils an der Freilaufkomponente 10 bzw. 20 und an der Stützeinheit 84 befestigt, sodass sich jeweils eine vormontierte Baugruppe 83 ergibt.

Durch die Vormontage der Baugruppe 83 kann schon bei der Erstmontage der Naben 1 eine höhere Qualität erreicht werden. Außerdem kann auch bei der späteren Demontage und anschließenden Montage eine höhere Reproduzierbarkeit und Qualität ermöglicht werden.

Durch die schwimmende Lagerung der beiden Axialverzahnungen 33 kann eine besonders flexible Anpassung der Freilaufeinrichtung 9 erreicht werden.

Die nabenseitige Freilaufkomponente 10 ist drehfest und axial verschiebbar in dem Gewindering 29 aufgenommen, der in das Nabengehäuse eingeschraubt ist. Das vergrößerte Detail unten links zeigt die miteinander verschraubten mehrgängigen Gewinde 29c und 2c. An dem Gewindering 29 sind die Gewindegänge 29e und 29f des hier zweigängigen Außengewindes ausgebildet, die mit den Gewindegängen 2e und 2f des Nabengehäuses 2 verschraubt sind. Auch hier wirkt weniger Axialkraft auf das Nabengehäuse 2 als bei Einsatz eines eingängigen Gewindes.

Die rotorseitige Freilaufkomponente 20 ist hingegen drehfest und axial verschiebbar in dem Rotor 8 aufgenommen. Dazu weisen der Gewindering 29 und der Rotor 8 bzw. die Freilaufkomponenten 10 und 20 jeweils eine aneinander angepasste unrunde Außenkontur 21 bzw. Innenkontur 37 auf.

In allen Ausgestaltungen stellt eine Freilaufeinheit 81 an beiden Seiten eine klar definierte Auflage zur Verfügung. Durch die Ausgestaltung und Fixierung ändern sich auch im laufenden Betrieb die Bedingungen nicht oder nur sehr wenig. Ohne Fixierung der Federeinheit ändern sich bei einem konventionellen Freilauf die entsprechenden Auflageflächen im Betrieb aufgrund einer sich verändernden Rauheit oder aufgrund von Verschleiß. Die Änderung ist dabei undefiniert. Mit einer Freilaufeinheit 81 gemäß der vorliegenden Erfindung herrschen hingegen immer definierte Bedingungen, sodass auch eine größere Lebensdauer erreicht werden kann.

Die Federeinheit mit einem großen Durchmesser erlaubt eine zuverlässige und ausreichend starke Vorbelastung. Eine umlaufende Federeinheit bietet erhebliche Vorteile, da diese auf dem gesamten Umfang immer passgenau reagiert.

In allen Ausgestaltungen erlaubt die Nabe eine höhere Seitensteifigkeit, eine erhöhte Biegesteifigkeit und einen noch sicheren Betrieb und eine bessere Wartbarkeit. Gleichzeitig kann das Gewicht gesenkt werden, was insbesondere im sportlichen Bereich und im professionellen Bereich von großer Bedeutung ist.

Ein weiterer Vorteil ist, dass der Nabenkörper einen kleineren Querschnitt aufweist und deshalb strömungsgünstiger ist. Die Anzahl der Teile ist geringer, sodass Wartung, Montage und Demontage einfacher werden. Auch die Fertigung der Nabe wird einfacher.

Ein sehr erheblicher Vorteil wird durch die mehrgängigen Gewinde erreicht, wodurch geringere Belastungen des Nabengehäuses und eine geringere Selbsthemmung erreicht werden.

In allen Ausgestaltungen ist es bevorzugt, dass an den Wälzlagern geschliffene Lagerinnenringe eingesetzt werden. Ebenso kann auch ein geschliffener Außenring eingesetzt werden, sodass sehr geringe Reibungswerte erzielt werden.

**Bezugszeichenliste:**

| | | | |
|---|---|---|---|
| 1 | Nabe | 33 | Eingriffselemente, Axialverzahnung |
| 2 | Nabengehäuse | | |
| 2a | Befestigungsabschnitt | 34 | Schmiermittel |
| 2b | Zentrierabschnitt | 35 | Absatz in 8 |
| 2c | Innengewinde | 36 | radialer Absatz |
| 2e | Gewindegang | 37 | Innenkontur |
| 2f | Gewindegang | 38 | Dichteinrichtung |
| 3, 4 | Endbereich | 39,40 | Endanschlag |
| 5 | Nabenachse | 41 | Hülsenkörper |
| 6, 7 | Rotorlager | 41a | Durchmesser |
| 8 | Rotor | 41b | Durchmesser |
| 9 | Freilaufeinrichtung | 42 | Hülsenkörper |
| 10 | Freilaufkomponente | 43,44 | radiale Verdickungen |
| 10a | Befestigungsbereich | 46 | Doppelflansch von 39 |
| 10b | Zentrierbereich | 47 | Dichtflansch von 40 |
| 10c | Außengewinde | 48 | O-Ring |
| 10e | Gewindegang | 49 | Schnell spanner |
| 10f | Gewindegang | 53 | Wälzkörper |
| 11 | Aufnahmeraum | 57 | Dichteinheit |
| 12 | Lagersitz | 60 | Außenring |
| 13 | axialer Körperabschnitt | 61 | Innenring |
| 13d | Anschlag | 70 | Innenkontur |
| 14 | Wälzlager | 80 | Fahrradkomponente |
| 15a | Toleranz, Spiel | 81 | Freilaufeinheit |
| 15b | Toleranz, Spiel | 82 | Aufnahmeabschnitt |
| 16a | Abstand | 83 | Baugruppe |
| 17 | Speichenflansch | 84 | Stützeinheit |
| 18 | Ringflansch | 84a | Sicherungseinrichtung |
| 20 | Freilaufkomponente | 85 | Stützabschnitt |
| 20a | Schutzeinrichtung | 86 | Aufnahmeflansch, Aufnahmelasche |
| 21 | Außenkontur | | |
| 22 | Stirnfläche, Stirnseite | 86a | Aufnahmeelement |
| 22a | Stützfläche | 87 | Ringwand |
| 23 | rohrförmiger Körperabschnitt | 88 | Stütz scheibe |
| | | 88a | Anlagefläche |
| 23a | Innenwandung | 89 | Stützflansch, Stützlasche |
| 23b | Längsabschnitt | 89a | Stützelement |
| 23c | Durchmesser | 90 | Hub |
| 24 | Wälzlager | 91 | Nut |
| 25 | Griffmulde, Verjüngung | 92 | Ring |
| 26 | Lagerabstand 14, 24 | 100 | Fahrrad |
| 27 | Lagerabstand 6, 7 | 101 | Rad, Vorderrad |
| 28 | rotorseitiger Ringflansch | 102 | Rad, Hinterrad |
| 29 | Gewindering | 103 | Rahmen |
| 29c | mehrgängiges Außengewinde | 104 | Gabel, Federgabel |
| 29e | Gewindegang | 105 | Hinterraddämpfer |
| 29f | Gewindegang | 106 | Lenker |
| 30 | zentrale Achse, Symmetrieachse | 107 | Sattel |
| | | 109 | Speiche |
| 31 | Eingriffsstellung | 110 | Felge |
| 32 | Vorbelastungseinrichtung, | 112 | Tretkurbel |
| | Federeinheit | P | Teilung |
| 32a | Windung | R | Steigung |
| 32b | Windungsende | | |

## Patentansprüche

1. Fahrradkomponente (80) für ein wenigstens teilweise muskelbetriebenes Fahrrad (100)
mit wenigstens einer Freilaufeinheit (81), welche eine Freilaufkomponente (20), eine Stützeinheit (84) und wenigstens eine Federeinheit (32) umfasst,
wobei die Freilaufkomponente (20) einen sich um eine zentrale Achse (30a) herum erstreckenden und hohl ausgebildeten rohrförmigen Körperabschnitt (23) mit einer unrunden Außenkontur (21) zur drehfesten und axial verschiebbaren Kopplung und eine Stirnfläche (22) mit axialen Eingriffselementen (33) aufweist,
und wobei die Federeinheit (32) die Freilaufkomponente (10, 20) und die Stützeinheit in einer axialen Richtung der zentralen Achse (30) auseinander drückt,
**dadurch gekennzeichnet,**
**dass** die Freilaufkomponente (20), die Stützeinheit (84) und die Federeinheit (32) eine vormontierbare Baugruppe bilden, und dass die Federeinheit (32) an der Freilaufkomponente (20) und an der Stützeinheit (84) befestigt ist.

2. Fahrradkomponente nach dem vorhergehenden Anspruch, wobei an der Freilaufkomponente (20) wenigstens ein Aufnahmeabschnitt (82) ausgebildet ist, an welchem die Federeinheit (32) befestigt ist.

3. Fahrradkomponente nach einem der vorhergehenden Ansprüche, wobei an der Stützeinheit (84) ein Stützabschnitt (85) ausgebildet ist und wobei die Federeinheit (32) an dem Stützabschnitt (85) befestigt ist.

4. Fahrradkomponente nach einem der vorhergehenden Ansprüche, wobei die Freilaufkomponente (20), die Stützeinheit (84) und die Federeinheit (32) verliersicher miteinander verbunden sind.

5. Fahrradkomponente nach einem der vorhergehenden Ansprüche, wobei ein Hub der Federeinheit (32) kleiner 15 mm beträgt und wobei ein Durchmesser der Baugruppe größer 25 mm beträgt und wobei ein freier axialer Abstand der Stützeinheit (84) zu der Freilaufkomponente (20) im unbelasteten Zustand kleiner 6 mm beträgt.

6. Fahrradkomponente nach einem der vorhergehenden Ansprüche, wobei die Freilaufkomponente (20) eine quer zu dem rohrförmigen Körperabschnitt (23) ausgebildete Stützfläche (22a) zur Abstützung der Federeinheit (32) umfasst und wobei insbesondere die Stützfläche (22a) an der axialen Innenseite der Stirnwand (22) oder an einer davon beabstandeten Ringwand (87) ausgebildet ist.

7. Fahrradkomponente nach einem der vorhergehenden Ansprüche, wobei der Aufnahmeabschnitt (82) an einer axialen Aufnahmelasche (86) ausgebildet ist und wobei insbesondere die Aufnahmelasche (86) rohrförmig ausgebildet ist und einen Aufnahmeflansch bildet und wobei der Aufnahmeabschnitt (82) an einer radialen Umfangsfläche des Aufnahmeflansches (86) ausgebildet ist.

8. Fahrradkomponente nach einem der vorhergehenden Ansprüche, wobei der Aufnahmeabschnitt (82) mehrere Teilabschnitte an einer Mehrzahl von Aufnahmeelementen (86a) umfasst, wobei die Aufnahmeelemente (86a) insbesondere als separate Teile ausgebildet sind und an der Freilaufkomponente (20) aufgenommen und z. B. geklemmt sind.

9. Fahrradkomponente nach einem der vorhergehenden Ansprüche, wobei der Aufnahmeabschnitt (82) an einer Innenwandung (23a) des rohrförmigen Körperabschnitts (23) in einem Längsabschnitt (23b) mit geringerem lichten Durchmesser ausgebildet ist, um die Federeinheit (32) radial innen klemmend aufzunehmen.

10. Fahrradkomponente nach einem der vorhergehenden Ansprüche, wobei der Aufnahmeabschnitt (82) wenigstens einen Gewindegang zum Verschrauben der Federeinheit (32) mit der Freilaufkomponente (20) umfasst.

11. Fahrradkomponente nach einem der vorhergehenden Ansprüche, wobei die Stützeinheit (84) eine Stützscheibe (88) und wenigstens eine Stützlasche (89) umfasst und wobei insbesondere die Stützlasche (89) als Stützflansch ausgebildet ist und zur radialen Klemmung der Federeinheit (32) ausgebildet ist und/oder wobei mehrere Stützelemente (89a) an der Stützscheibe (87) ausgebildet sind und/oder wobei die Federeinheit (32) einen Federkörper aufweist, der sich um die zentrale Achse (30) herum erstreckt.

12. Fahrradkomponente nach einem der vorhergehenden Ansprüche, wobei die Federeinheit (32) als Spiralfeder mit wenigstens einer umlaufenden Windung (32a) oder als Wellenfeder ausgebildet ist und wobei insbesondere ein Außendurchmesser der Federeinheit größer als 15 mm ist und wobei ein Verhältnis des Außendurchmessers der Federeinheit (32) zu einem Durchmesser der Windung kleiner als 50 und größer als 15 ist und/oder wobei wenigstens ein Ende (32b) der Windung (32a) der Federeinheit (32) radial nach innen und/oder außen umgebogen ist und/oder wobei ein Schmiermittel wie ein Fett zum Befestigen der Federeinheit(32) an der Freilaufkomponente (20) und/oder der Stützeinheit (84) wenigstens beiträgt.

13. Fahrradkomponente (80) für ein wenigstens teilweise muskelbetriebenes Fahrrad (100)
mit wenigstens einer Freilaufeinheit (81), welche eine Freilaufkomponente (20) und eine Stützeinheit und wenigstens eine sich zwischen der Stützeinheit (84) und der Freilaufkomponente (20) abstützende Federeinheit (32) umfasst,
wobei die Freilaufkomponente (20) einen sich um eine zentrale Achse (30a) herum erstreckenden und hohl ausgebildeten rohrförmigen Körperabschnitt (23) mit einer unrunden Außenkontur (21) zur drehfesten und axial verschiebbaren Kopplung und eine Stirnfläche (22) mit axialen Eingriffselementen (33) aufweist,
und wobei die Federeinheit (32) einen Federkörper aufweist und zur Vorbelastung der Freilaufkomponente (10, 20) in einer axialen Richtung der zentralen Achse (30) dient,
**dadurch gekennzeichnet,**
**dass** die Stützeinheit (84) eine sich axial in Richtung der Freilaufkomponente (20) erstreckende Sicherungseinrichtung (84a) aufweist, und/oder dass die Freilaufkomponente (20) eine sich axial in Richtung der Stützeinheit (84) erstreckende Schutzeinrichtung (20a) aufweist, um ein Abrutschen eines Endes der Federeinheit (32) nach innen zu verhindern und wobei insbesondere die Sicherungseinrichtung (84a) an der Stützeinheit (84) einen Stützflansch (89) oder Stützelemente (89a) umfasst, die ein Abrutschen eines Endes der Federeinheit (32) nach innen verhindern und wobei insbesondere die Federeinheit (32) auf dem Stützflansch (89) oder den Stützelementen (89a) aufliegt.

14. Fahrradkomponente nach dem vorhergehenden Anspruch, wobei die Schutzeinrichtung (20a) an der Freilaufkomponente (20) einen Aufnahmeflansch (86) oder Aufnahmeelemente (86a) umfasst, die ein Abrutschen eines Endes der Federeinheit (32) nach innen verhindern und/oder wobei sich eine Schutzeinrichtung (20a) oder eine Sicherungseinrichtung (84a) über eine axiale Länge erstreckt, die größer ist als ein Stärke einer Wandung der Federeinheit (32) und/oder wobei wobei zwischen der Schutzeinrichtung (20a) an der Freilaufkomponente (20) und dem rohrförmigen Körperabschnitt (23) ein nutförmiger Aufnahmeraum für ein Ende der Federeinheit (32) mit z. B. U-förmigen Querschnitt ausgebildet ist und/oder wobei zwischen der Schutzeinrichtung (20a) und der Federeinheit (32) und/oder zwischen der Sicherungseinrichtung (84a) und der Federeinheit (32) ein freier radialer Abstand besteht.

15. Fahrradkomponente nach wenigstens einem der vorhergehenden Ansprüche, umfassend ein gegenüber einer Nabenachse (5) drehbar gelagertes Nabengehäuse (2) und einen drehbar gelagerten Rotor (8), insbesondere umfassend eine Freilaufeinrichtung (9) mit zwei miteinander zusammenwirkenden Freilaufkomponenten (10, 20), nämlich eine nabenseitigen Freilaufkomponente (10) und eine rotorseitige Freilaufkomponente (20),
wobei die beiden Freilaufkomponenten (10, 20) jeweils axiale Eingriffselemente (33) zum Eingriff ineinander aufweisen, wobei die nabenseitige Freilaufkomponente (10) drehfest mit dem Nabengehäuse verbunden ist,
wobei die rotorseitige Freilaufkomponente (20) drehfest mit dem Rotor verbunden ist und in axialer Richtung (30) relativ zu dem Rotor und dem Nabengehäuse wenigstens zwischen einer Freilaufstellung und einer Eingriffsstellung (31) bewegbar ist,
und wobei wenigstens eine der Freilaufkomponenten (10) Bestandteil einer Freilaufeinheit (81) ist und wobei insbesondere die nabenseitige Freilaufkomponente (10) mit dem Nabengehäuse über ein mehrgängiges Gewinde mit wenigstens zwei separaten und axial voneinander beabstandeten Gewindegängen verbunden ist und wobei in der nabenseitigen Freilaufkomponente (10) Wälzkörper (53) definiert aufgenommen sind, um das Nabengehäuse (2) gegenüber der Nabenachse (5) zu lagern und/oder wobei in dem Rotor eine unrunde Innenkontur (37) ausgebildet ist, welche eine drehfeste Aufnahme und axiale Verschiebbarkeit der rotorseitigen Freilaufkomponente (20) ermöglicht und wobei sich an die unrunde Innenkontur (37) ein Hinterstich anschließt.

## Claims

1. Bicycle component (80) for an at least partially muscle-powered bicycle (100)
having at least one freewheel unit (81) comprising a freewheel component (20), a support unit (84) and at least one spring unit (32),
the freewheel component (20) comprising a tubular body section (23) extending around the central axis (30a) and configured hollow, having a non-round outer contour (21) for non-rotatable and axially displaceable coupling, and a front surface (22) with axial engagement components (33),
and wherein the spring unit (32) urges the freewheel component (10, 20) and the support unit apart in the axial direction of the central axis (30),
**characterized in**
**that** the freewheel component (20), the support unit (84) and the spring unit (32) form an assembly suitable for pre-assembly, and that the spring unit (32) is attached to the freewheel component (20) and to the support unit (84).

2. The bicycle component according to the preceding claim, wherein the freewheel component (20) is configured with at least one accommodation section (82) to which the spring unit (32) is attached.

3. The bicycle component according to any of the preceding claims, wherein the support unit (84) is configured with a support section (85), and wherein the spring unit (32) is attached to the support section (85).

4. The bicycle component according to any of the preceding claims, wherein the freewheel component (20), the support unit (84) and the spring unit (32) are connected with one another secure against loss.

5. The bicycle component according to any of the preceding claims, wherein the stroke length of the spring unit (32) is less than 15 mm, and wherein the diameter of the assembly is larger than 25 mm, and wherein the free axial distance of the support unit (84) from the freewheel component (20) in the unloaded state is less than 6 mm.

6. The bicycle component according to any of the preceding claims, wherein the freewheel component (20) comprises a supporting surface (22a) transverse to the tubular body section (23), configured for supporting the spring unit (32), and wherein in particular the supporting surface (22a) is configured on the axially inside surface of the front face (22), or on an annular wall (87) spaced apart therefrom.

7. The bicycle component according to any of the preceding claims, wherein the accommodation section (82) is configured on an axial takeup tab (86), and wherein the takeup tab (86) is in particular tubular in configuration and forms a takeup flange, and wherein the accommodation section (82) is configured on a radially peripheral surface of the takeup flange (86).

8. The bicycle component according to any of the preceding claims, wherein the accommodation section (82) comprises multiple part sections on a multitude of accommodating members (86a), wherein the accommodating members (86a) are in particular configured as separate parts and are accommodated and e.g. clamped on the freewheel component (20).

9. The bicycle component according to any of the preceding claims, wherein the accommodation section (82) is configured on an inner wall (23a) of the tubular body section (23) in a longitudinal section (23b) having a narrower clear diameter to accommodate the spring unit (32) for radially inwardly clamping.

10. The bicycle component according to any of the preceding claims, wherein the accommodation section (82) comprises at least one thread groove for a screwed connection of the spring unit (32) with the freewheel component (20).

11. The bicycle component according to any of the preceding claims, wherein the support unit (84) comprises a support disk (88) and at least one support tab (89), and wherein in particular the support tab (89) is configured as a support flange and is configured for radially clamping the spring unit (32), and/or wherein multiple support members (89a) are configured on the support disk (87), and/or wherein the spring unit (32) comprises a spring body extending around the central axis (30).

12. The bicycle component according to any of the preceding claims, wherein the spring unit (32) is configured as a coil spring having at least one circumferential coil (32a), or as a zigzag spring, and wherein in particular the outer diameter of the spring unit is larger than 15 mm, and wherein the ratio of the outer diameter of the spring unit (32) to the diameter of the coil is less than 50 and more than 15, and/or wherein at least one end (32b) of the coil (32a) of the spring unit (32) is bent radially inwardly and/or outwardly, and/or wherein a lubricant such as grease at least contributes to fastening the spring unit (32) to the freewheel component (20) and/or the support unit (84) .

13. A bicycle component (80) for an at least partially muscle-powered bicycle (100)
having at least one freewheel unit (81) comprising a freewheel component (20) and a support unit and at least one spring unit (32) supported between the support unit (84) and the freewheel component (20),
the freewheel component (20) comprising a tubular body section (23) extending around the central axis (30a) and configured hollow, having a non-round outer contour (21) for non-rotatable and axially displaceable coupling, and a front surface (22) with axial engagement components (33),
and wherein the spring unit (32) comprises a spring body and serves for biasing the freewheel component (10, 20) in the axial direction of the central axis (30),
**characterized in**
**that** the support unit (84) comprises a safety device (84a) extending axially in the direction of the freewheel component (20), and/or that the freewheel component (20) comprises a protective device (20a) extending axially in the direction of the support unit (84) to prevent the end of the spring unit (32) from side-slipping inwardly, and wherein in particular the safety device (84a) comprises on the support unit (84) a support flange (89) or support members (89a) which prevent the end of the spring unit (32) from side-slipping inwardly, and wherein in particular the spring unit (32) rests on the support flange (89) or the support members (89a).

14. The bicycle component according to the preceding claim, wherein the protective device (20a) comprises on the freewheel component (20) a takeup flange (86) or accommodating members (86a), which prevent the end of the spring unit (32) from side-slipping inwardly, and/or wherein a protective device (20a) or a safety device (84a) extends over an axial length that is larger than the thickness of a wall of the spring unit (32), and/or wherein a groove-shaped receiving space for the end of the spring unit (32) having e.g. a U-shaped cross-section is formed between the protective device (20a) on the freewheel component (20) and the tubular body section (23), and/or wherein a free radial distance is provided between the protective device (20a) and the spring unit (32), and/or between the safety device (84a) and the spring unit (32).

15. The bicycle component according to at least one of the preceding claims, comprising a hub shell (2) rotatably supported relative to the hub axle (5), and a rotatably supported rotor (8), in particular comprising a freewheel device (9) having two interacting freewheel components (10, 20) namely, a hub-side freewheel component (10) and a rotor-side freewheel component (20),
wherein the two freewheel components (10, 20) each comprise axial engagement components (33) for intermeshing with one another, wherein the hub-side freewheel component (10) is non-rotatably connected with the hub shell,
wherein the rotor-side freewheel component (20) is non-rotatably connected with the rotor and is movable in the axial direction (30) relative to the rotor and the hub shell at least between a freewheel position and an engagement position (31),
and wherein at least one of the freewheel components (10) is part of a freewheel unit (81), and wherein in particular the hub-side freewheel component (10) is connected with the hub shell through a multiple thread having at least two separate, axially spaced apart thread grooves, and wherein the hub-side freewheel component (10) provides for defined accommodation of rolling members (53) to support the hub shell (2) relative to the hub axle (5), and/or wherein a non-round inner contour (37) is formed in the rotor allowing non-rotatable accommodation and axial displaceability of the rotor-side freewheel component (20), and wherein an undercut follows the non-round inner contour (37).

## Revendications

1. Composant de bicyclette (80) pour une bicyclette (100) entraînée, au moins en partie, par force musculaire,
comprenant au moins une unité de roue libre (81) qui comprend un composant de roue libre (20), une unité de support (84) et au moins une unité de ressort (32),
dans lequel le composant de roue libre (20) présente une section de corps (23) tubulaire creuse qui s'étend autour d'un axe central (30a) et présente un contour extérieur (21) non rond pour un accouplement solidaire en rotation et axialement déplaçable ainsi qu'une surface frontale (22) ayant des éléments d'engagement (33) axiaux,
et dans lequel l'unité de ressort (32) écarte le composant de roue libre (10, 20) et l'unité de support l'un de l'autre dans une direction axiale de l'axe central (30), **caractérisé par le fait**
**que** le composant de roue libre (20), l'unité de support (84) et l'unité de ressort (32) forment un ensemble apte à être pré-assemblé, et que l'unité de ressort (32) est fixée sur le composant de roue libre (20) et sur l'unité de support (84).

2. Composant de bicyclette selon la revendication précédente, dans lequel au moins une section de réception (82) est réalisée sur le composant de roue libre (20), sur laquelle est fixée l'unité de ressort (32).

3. Composant de bicyclette selon l'une quelconque des revendications précédentes, dans lequel une section de support (85) est réalisée sur l'unité de support (84) et dans lequel l'unité de ressort (32) est fixée sur la section de support (85).

4. Composant de bicyclette selon l'une quelconque des revendications précédentes, dans lequel le composant de roue libre (20), l'unité de support (84) et l'unité de ressort (32) sont reliés de manière imperdable les uns aux autres.

5. Composant de bicyclette selon l'une quelconque des revendications précédentes, dans lequel une course de l'unité de ressort (32) est inférieure à 15 mm et dans lequel un diamètre de l'ensemble est supérieur à 25 mm et dans lequel une distance axiale libre de l'unité de support (84) au composant de roue libre (20) à l'état non chargé est inférieure à 6 mm.

6. Composant de bicyclette selon l'une quelconque des revendications précédentes, dans lequel le composant de roue libre (20) comprend une surface de support (22a) qui est réalisée transversalement à la section de corps (23) tubulaire et destinée à supporter l'unité de ressort (32), et dans lequel, en particulier, la surface de support (22a) est réalisée sur la face intérieure axiale de la paroi frontale (22) ou sur une paroi annulaire (87) espacée de celle-ci.

7. Composant de bicyclette selon l'une quelconque des revendications précédentes, dans lequel ladite section de réception (82) est réalisée sur une languette de réception (86) axiale et dans lequel, en particulier, ladite languette de réception (86) est conçue de manière tubulaire et forme une bride de réception et dans lequel la section de réception (82) est réalisée sur une surface circonférentielle radiale de la bride de réception (86).

8. Composant de bicyclette selon l'une quelconque des revendications précédentes, dans lequel la section de réception (82) comprend plusieurs sous-sections sur une pluralité d'éléments de réception (86a), dans lequel lesdits éléments de réception (86a) sont conçus en particulier en tant que pièces séparées et sont reçus, et par exemple serrés, sur le composant de roue libre (20).

9. Composant de bicyclette selon l'une quelconque des revendications précédentes, dans lequel la section de réception (82) est réalisée sur une paroi intérieure (23a) de la section de corps (23) tubulaire dans une section longitudinale (23b) ayant un diamètre intérieur plus petit afin de recevoir l'unité de ressort (32) par serrage radialement intérieur.

10. Composant de bicyclette selon l'une quelconque des revendications précédentes, dans lequel la section de réception (82) comprend au moins un pas de filet pour visser l'unité de ressort (32) et le composant de roue libre (20).

11. Composant de bicyclette selon l'une quelconque des revendications précédentes, dans lequel ladite unité de support (84) comprend un disque de support (88) et au moins une languette de support (89) et dans lequel, en particulier, ladite languette de support (89) est conçue en tant que bride de support et réalisée pour le serrage radial de l'unité de ressort (32) et/ou dans lequel plusieurs éléments de support (89a) sont réalisés sur le disque de support (87) et/ou dans lequel l'unité de ressort (32) comprend un corps de ressort qui s'étend autour de l'axe central (30).

12. Composant de bicyclette selon l'une quelconque des revendications précédentes, dans lequel l'unité de ressort (32) est conçue en tant que ressort spiral ayant au moins une spire circonférentielle (32a) ou en tant que ressort ondulé, et dans lequel, en particulier, un diamètre extérieur de l'unité de ressort est supérieur à 15 mm et dans lequel un rapport du diamètre extérieur de l'unité de ressort (32) à un diamètre de la spire est inférieur à 50 et supérieur à 15 et/ou dans lequel au moins une extrémité (32b) de la spire (32a) de l'unité de ressort (32) est recourbée radialement vers l'intérieur et/ou vers l'extérieur et/ou dans lequel un lubrifiant tel qu'une graisse contribue au moins à fixer l'unité de ressort (32) sur le composant de roue libre (20) et/ou sur l'unité de support (84).

13. Composant de bicyclette (80) pour une bicyclette (100) entraînée, au moins en partie, par force musculaire,
comprenant au moins une unité de roue libre (81) qui comprend un composant de roue libre (20) et une unité de support (84) et au moins une unité de ressort (32) s'appuyant entre ladite unité de support (84) et ledit composant de roue libre (20),
dans lequel le composant de roue libre (20) présente une section de corps (23) tubulaire creuse qui s'étend autour d'un axe central (30a) et présente un contour extérieur (21) non rond pour un accouplement solidaire en rotation et axialement déplaçable, ainsi qu'une surface frontale (22) avec des éléments d'engagement (33) axiaux,
et dans lequel l'unité de ressort (32) comprend un corps de ressort et sert à précontraindre le composant de roue libre (10, 20) dans une direction axiale de l'axe central (30),
**caractérisé par le fait**
**que** l'unité de support (84) comprend un dispositif de sécurité (84a) s'étendant axialement dans la direction du composant de roue libre (20), et/ou que le composant de roue libre (20) présente un dispositif de protection (20a) s'étendant axialement dans la direction de l'unité de support (84) afin d'empêcher une extrémité de l'unité de ressort (32) de glisser vers l'intérieur, et dans lequel, en particulier, ledit dispositif de sécurité (84a) sur l'unité de support (84) comprend une bride de support (89) ou des éléments de support (89a) qui empêchent une extrémité de l'unité de ressort (32) de glisser vers l'intérieur, et dans lequel, en particulier, l'unité de ressort (32) repose sur la bride de support (89) ou les éléments de support (89a).

14. Composant de bicyclette selon la revendication précédente, dans lequel le dispositif de protection (20a) sur le composant de roue libre (20) comprend une bride de réception (86) ou des éléments de réception (86a) qui empêchent une extrémité de l'unité à ressort (32) de glisser vers l'intérieur et/ou dans lequel un dispositif de protection (20a) ou un dispositif de sécurité (84a) s'étend sur une longueur axiale qui est supérieure à une épaisseur d'une paroi de l'unité à ressort (32) et/ou dans lequel un espace de réception en forme de rainure pour une extrémité de l'unité de ressort (32) ayant par exemple une section transversale en U est réalisé entre le dispositif de protection (20a) sur le composant de roue libre (20) et la section de corps (23) tubulaire, et/ou dans lequel une distance radiale libre existe entre le dispositif de protection (20a) et l'unité de ressort (32) et/ou entre le dispositif de sécurité (84a) et l'unité de ressort (32).

15. Composant de bicyclette selon l'une au moins des revendications précédentes, comprenant un carter de moyeu (2) logé à rotation par rapport à un axe de moyeu (5) ainsi qu'un rotor (8) logé à rotation, comprenant en particulier un dispositif de roue libre (9) ayant deux composants de roue libre (10, 20) agissant de concert l'un avec l'autre, à savoir un composant de roue libre (10) côté moyeu et un composant de roue libre (20) côté rotor,
dans lequel les deux composants de roue libre (10, 20) présentent chacun des éléments d'engagement (33) axiaux destinés à s'engager l'un avec l'autre, dans lequel le composant de roue libre (10) côté moyeu est relié de manière solidaire en rotation au carter de moyeu,
dans lequel le composant de roue libre (20) côté rotor est relié de manière solidaire en rotation au rotor et peut être déplacé dans la direction axiale (30) par rapport au rotor et au carter de moyeu au moins entre une position de roue libre et une position d'engagement (31),
et dans lequel au moins l'un des composants de roue libre (10) est une partie constituante d'une unité de roue libre (81) et dans lequel, en particulier, le composant de roue libre (10) côté moyeu est relié au carter de moyeu par l'intermédiaire d'un filetage multiple ayant au moins deux pas de filet séparés et espacés axialement l'un de l'autre, et dans lequel, dans le composant de roue libre (10) côté moyeu, des éléments roulants (53) sont reçus d'une manière définie afin de supporter le carter de moyeu (2) par rapport à l'axe de moyeu (5) et/ou dans lequel un contour intérieur (37) non rond est réalisé dans le rotor, qui permet de recevoir d'une manière solidaire en rotation et de déplacer axialement le composant de roue libre (20) côté rotor, et dans lequel le contour intérieur (37) non rond est suivi d'une contre-dépouille.
